(19) Europäisches Patentamt
European Patent Office
Office européen des brevets

(11) **EP 4 686 021 A1**

(12) **EUROPEAN PATENT APPLICATION**

(43) Date of publication:
**28.01.2026  Bulletin 2026/05**

(21) Application number: **25189449.9**

(22) Date of filing: **14.07.2025**

(51) International Patent Classification (IPC):
**H02H 3/033** (2006.01)  **H02H 3/093** (2006.01)
**H02H 7/26** (2006.01)  **H02J 3/14** (2026.01)
**H02H 3/00** (2006.01)  **H02H 6/00** (2006.01)

(52) Cooperative Patent Classification (CPC):
**H02J 3/14; H02H 3/033; H02H 3/0935; H02H 7/26;**
**H02J 13/00004;** H02H 3/006; H02H 6/005;
H02J 2310/12; H02J 2310/14; H02J 2310/60;
H02J 2310/62

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.07.2024  US 202418784628
10.01.2025  US 202519017376
04.04.2025  US 202519171191**

(71) Applicant: **Schneider Electric USA, Inc.
Andover, MA 01810 (US)**

(72) Inventor: **Jakupi, Andi
Marion, IA (US)**

(74) Representative: **Manitz Finsterwald
Patent- und Rechtsanwaltspartnerschaft mbB
Martin-Greif-Straße 1
80336 München (DE)**

(54) **DYNAMIC LOAD CONTROL WITH EXTERNAL COORDINATION**

(57)    Systems/methods for managing a load center (500) uses a thermal model of an overcurrent protection device to adjust the load center (500) energy level. The systems/methods provide an energy management system (EMS) that manages the amount of load energy in the load center (500) to allow the load center (500) to operate in an overloaded state without inducing thermal tripping. The EMS (512) includes a dynamic load control algorithm that can continuously determine in real time the amount of time remaining until load shedding is required to ensure thermal tripping is avoided, and coordinate with various loads (508) to reduce the amount of load center (500) energy. The EMS (512) can send a request to the loads (508) that includes the time remaining until load shedding is required to allow each load (518) to decide for itself how best to respond. In some embodiments, the request may also include a power margin by which each load (508) should reduce power consumption.

FIG. 5

**EP 4 686 021 A1**

**Description**

CROSS-REFERENCE TO RELATED APPLICATIONS

This application for patent is a continuation-in-part of U.S. Non-Provisional Application No. 19/017,376, entitled "Maintaining Current Utility Service with Load Expansion and Dynamic Load Adjustment Based on Panel Temperature," filed January 10, 2025, which is a continuation-in-part of U.S. Non-Provisional Application No. 18/784,628, entitled "Controlling Load Centers Based on Thermal Characteristics," filed July 25, 2024, all of the foregoing applications being incorporated herein by reference in their entirety.

TECHNICAL FIELD

The present disclosure relates to electrical distribution panels and other load centers, and particularly to systems and methods for maintaining current utility service while supporting an expanded load and also making dynamic load adjustments based on panel temperature.

BACKGROUND

A load center in a home or building refers to the main point of distribution for utility power throughout the home or building. In most homes and buildings, the load center is an electrical distribution panel housed within a metal enclosure mounted on a wall in a utility closet, garage, and the like. The load center typically has a series of slots in which circuit protection devices, such as circuit breakers, relays, surge protectors, and the like, may be installed. Each of these devices provides power to and fault protection for a separate branch circuit in the home or building (e.g., kitchen, master bedroom, game room, etc.). This prevents a fault occurring in one branch circuit from affecting the power supplied to other branch circuits.

Most load centers are sized, or rated, when installed to ensure sufficient current carrying capacity to simultaneously power all typical loads on the branch circuits. For a residential dwelling, for example, the contemplated loads may include HVAC equipment, washer and dryer, electric range, water heater, refrigerator, and various appliances. As subsequent loads are added to the load center, especially large loads, such as an electric vehicle (EV) charger, pool pump, and the like, or existing loads are replaced (e.g., a larger HVAC unit), the demand for utility power may increase beyond the load center rating and cause the load center to operate in an "overloaded" state. When that happens, an overcurrent protection device (OCPD) in the load center interrupts or "trips" utility power to the branch circuits. The trips typically occur automatically, either instantly or after a fixed amount of time that is preset within the OCPD, depending on the level of overcurrent.

One way to prevent unwanted trips, or nuisance trips, is to upgrade the load center, for example, by installing a new, higher-rated load center, or by increasing the size (i.e., handle rating) of the OCPD in the existing load center. However, installing a new load center or replacing the OCPD in an existing load center can be a costly endeavor, typically requiring a certified electrician or other specially trained personnel to perform the installation or expansion. As well, such installation or expansion typically requires structural changes to walls and ceilings, especially for older residential dwellings, in order to accommodate new cabling and the like for the higher rating, which can further increase cost and complications. Service feeder upgrade may also be required to support higher rated load centers, which may require the utility to lay a new cable/wires from the transformer to the home/dwelling.

Accordingly, a need exists for a way to manage load centers to avoid unwanted trips without having to install a new load center or expand an existing load center.

SUMMARY

Embodiments of the present disclosure relate to systems and methods for managing a load center to prevent unwanted trips without having to install a new load center, expand an existing load center, or update the utility service line. The systems and methods provide a way to manage the amount of load energy in the load center to allow the load center to operate in an overloaded state without inducing thermal tripping of the load center. These systems and methods may take the form of an energy management system that monitors temperature change within the load center and also the load center energy level, and determines whether the load center is close to thermal tripping based on the temperature change and the energy level. The energy management system includes a dynamic load control algorithm that can continuously determine in real time the amount of time remaining until load shedding is required to prevent thermal tripping and coordinate with various wiring devices, appliances, and other loads to reduce the amount of load energy in the load center to avoid the thermal tripping. For loads that are "smart loads," the coordination may be accomplished using either a dedicated communication protocol or a standard communication protocol, such as Matter over Wi-Fi or Thread, Open Charge Point Protocol (OCPP), or various IEEE protocols, and the like. The energy management system can use these protocols to communicate a request to the smart loads to request that the smart loads reduce their power consumption to avoid thermal tripping of the load center. The request may include the time remaining until load shedding is required to prevent thermal tripping of the load center, thus allowing each smart load to decide for itself how best to respond in view of the time remaining. In some embodiments, the request that the energy management system sends to the smart loads may also include a power margin by which each smart load should reduce its power consumption. The device controller for each smart load can then decide whether to complete its current operation cycle, or interrupt the operation cycle and change to a lower power state to avoid potential damage or malfunction due to an interruption of power. In the event none of the smart loads can reduce their power consumption, or they decline to do so, the energy management system can communicate with or otherwise cause the respective circuit breakers for the smart loads to disconnect power to the loads. Monitoring the load center temperature and energy level and coordinating with the smart loads and their circuit breakers in this way to reduce power consumption allows the load center to remain in an overloaded state without tripping.

Allowing the load center to operate in an overloaded state without thermal tripping provides several advantages and benefits. For example, homeowners and occupants can continue using their existing load centers rather than upgrading or replacing the load centers, thereby avoiding significant costs, disruption of routines, and stress. Further, electrical utilities can skip service upgrades and updating of electrical infrastructure that may be needed, for example, if multiple homeowners in a given area were to upgrade or replace their main load centers. The embodiments herein also help keep load center bus bars and service feeder conductors from being overloaded to an extent that damage occurs or where the main breaker is prevented from tripping. These embodiments also minimize interruptions of any expanded loads on the load center in the event load shedding is needed, allowing such loads to continue running normally for longer intervals while the load center is in an overloaded state.

In general, in one aspect, embodiments of the present disclosure relate to an energy management system for a load center. The system comprises, among other things, a processor, and a storage unit coupled to the processor, the storage unit storing computer-readable instructions thereon. When executed by the processor, the computer-readable instructions cause the processor to obtain a load center energy level from an overcurrent protection device in the load center, the load center energy level indicating an amount of current flowing through the overcurrent protection device. The computer-readable instructions also cause the processor to determine that the load center is operating in an overloaded state based on the load center energy level, and send a request to a smart load of the load center requesting that the smart load reduce a power consumption thereof to avoid thermal tripping of the overcurrent protection device. The computer-readable instructions further cause the processor to wait a predefined acknowledgment period for receipt of an acknowledgment from the smart load indicating that the smart load has received the request.

In general, in another aspect, embodiments of the present disclosure relate to a method of managing a load center. The method comprises, among other things, obtaining a load center energy level from an overcurrent protection device in the load center, the load center energy level indicating an amount of current flowing through the overcurrent protection device. The method also comprises determining that the load center is operating in an overloaded state based on the load center energy level, and sending a request to a smart load of the load center requesting that the smart load reduce a power consumption thereof to avoid thermal tripping of the overcurrent protection device. The method further comprises waiting a predefined acknowledgment period for receipt of an acknowledgment from the smart load indicating that the smart load has received the request.

In general, in yet another aspect, embodiments of the present disclosure relate to a load center. The load center comprises, among other things, a housing, an overcurrent protection device installed within the housing, and an energy management system installed within the housing and communicatively coupled to the overcurrent protection device. The energy management system is configured to obtain a load center energy level from an overcurrent protection device in the load center, the load center energy level indicating an amount of current flowing through the overcurrent protection device. The energy management system is also configured to determine that the load center is operating in an overloaded state based on the load center energy level, and send a request to a smart load of the load center requesting that the smart load reduce a power consumption thereof to avoid thermal tripping of the overcurrent protection device. The energy management system is further configured to wait a predefined acknowledgment period for receipt of an acknowledgment from the smart load indicating that the smart load has received the request.

In accordance with any one or more of the foregoing embodiments, the energy management system is further configured to estimate a time-to-shed in response to determining that the load center is operating in the overloaded state, the time-to-shed representing an amount of time until load shedding is required for one or more loads of the load center to ensure thermal tripping of the overcurrent protection device is avoided if the load center continues operating in the overloaded state.

In accordance with any one or more of the foregoing embodiments, the energy management system is further configured to include the time-to-shed in the request sent to the smart load, the time-to-shed indicating to the smart load an amount of time within which the smart load is requested to reduce the power consumption thereof.

In accordance with any one or more of the foregoing embodiments, the energy management system is further configured to estimate a power margin for the load center, the power margin indicating an amount of power by which the load center energy level exceeds a power rating of the load center or a permissible percentage thereof.

In accordance with any one or more of the foregoing embodiments, the energy management system is further configured to include the power margin in the request sent to the smart load, the power margin indicating to the smart load an amount of power by which the smart load is requested to reduce the power consumption thereof.

In accordance with any one or more of the foregoing embodiments, the smart load is one of a plurality of smart loads of the load center and the energy management system is further configured to select the smart load from among the plurality of smart loads to send the request to based on a priority level of the smart load.

In accordance with any one or more of the foregoing embodiments, the smart load is a first smart load and the energy management system is further configured to select a second smart load from among the plurality of smart loads to send a request to based on a priority level of the second smart load in response to: not receiving the acknowledgment from the first smart load within the predefined acknowledgment period, or the load center continuing to operate in the overloaded state after the acknowledgment is received from the first smart load within the predefined acknowledgment period.

In accordance with any one or more of the foregoing embodiments, the energy management system is further configured to determine that the load center is no longer operating in the overloaded state based on the load center energy level, and send a notice to each smart load in the plurality of smart loads to which a request was sent, the notice indicating to the smart load that the load center is no longer operating in the overloaded state.

In accordance with any one or more of the foregoing embodiments, the energy management system is further configured to select a circuit breaker in the load center based on a priority level of a smart load of the circuit breaker and send a command to the circuit breaker to disconnect power from the smart load of the circuit breaker in response to one of: not receiving an acknowledgment from any smart load in the plurality of smart loads to which a request was sent within the predefined acknowledgment period, or the load center continuing to operate in the overloaded state after an acknowledgment is received from each smart load in the plurality of smart loads to which a request was sent within the predefined acknowledgment period.

In accordance with any one or more of the foregoing embodiments, the energy management system is further configured to determine that the load center is no longer operating in the overloaded state based on the load center energy level, and send a command to the circuit breaker to reconnect power to the smart load of the circuit breaker in response to determining that the load center is no longer operating in the overloaded state.

In accordance with any one or more of the foregoing embodiments, the energy management system is further configured to obtain a panel temperature within the load center corresponding to the load center energy level and determining that the load center is operating in the overloaded state based on the panel temperature within the load center and the load center energy level.

## BRIEF DESCRIPTION OF THE DRAWINGS

FIG. 1 illustrates an example trip curve for a circuit breaker in accordance with embodiments of the present disclosure;
FIG. 2 illustrates an example current-ambient temperature chart for a circuit breaker in accordance with embodiments of the present disclosure;
FIG. 3 illustrates an example temperature-trip time graph for a circuit breaker in accordance with embodiments of the present disclosure;
FIG. 4 illustrates another example trip curve for a circuit breaker in accordance with embodiments of the present disclosure;
FIG. 5 illustrates an example load center in accordance with embodiments of the present disclosure;
FIG. 6 illustrates an example energy management system in accordance with embodiments of the present disclosure;
FIG. 7 illustrates an example circuit breaker-to-load map in accordance with embodiments of the present disclosure;
FIG. 8 illustrates an example method for communicating a power reduction request to smart loads in accordance with embodiments of the present disclosure;
FIG. 9 illustrates an example method for determining whether load shedding is needed in accordance with embodiments of the present disclosure;
FIG. 10 illustrates an example method for performing thermal shedding in accordance with embodiments of the present disclosure;
FIG. 11 illustrates an example method for performing immediate shedding state in accordance with embodiments of the present disclosure;
FIG. 12 illustrates an example method for performing recovery and normal operation in accordance with embodiments of the present disclosure;

FIG. 13 illustrates an example method for communicating a request to reduce power consumption in accordance with embodiments of the present disclosure;

FIG. 14 illustrates an example computing system that may be used for the energy management system in accordance with embodiments of the present disclosure; and

FIG. 15 illustrates an example storage system that may be used for the energy management system in accordance with embodiments of the present disclosure.

DETAILED DESCRIPTION

This description and the accompanying drawings illustrate example embodiments of the present disclosure and should not be taken as limiting, with the claims defining the scope of the present disclosure, including equivalents. Various mechanical, compositional, structural, electrical, and operational changes may be made without departing from the scope of this description and the claims, including equivalents. In some instances, well-known structures and techniques have not been shown or described in detail so as not to obscure the disclosure. Further, elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment.

As alluded to above, adding loads to an existing load center, especially large loads, or replacing a load with a larger load, may increase the demand for utility power beyond the load center rating and cause the load center to operate in an overloaded state. When the demand for power increases thusly, homeowners and occupants need to upgrade their load centers by upgrading the main breakers in the load centers (i.e., the OCPDs), the bus bars, and/or the service feeder conductors. Embodiments of the present disclosure allow the homeowners to avoid these large and costly upgrades by keeping the service entrance and electrical panel at the same rating, and instead operate the electrical panel in an overloaded state. These embodiments leverage several insights discerned by the present inventor regarding main breaker operation as well as certain types of loads, as discussed herein.

The above arrangement is particularly advantageous where the loads connected to the load center are so-called "smart" loads. As technology evolves, appliances have become smarter and can now communicate with each other and with external devices using different communication protocols, such as Matter over Wi-Fi or Thread, OCPP, and other protocols. Many smart loads are also equipped with advanced functions that can detect and report when their operational state changes, when an operation has completed, and even provide diagnostic information. In a smart oven, for example, the oven controller can determine the power consumption needed based on the amount of time remaining for a given baking/roasting job. Other devices like smart thermostats can estimate the power consumption needed based on the rate of change of heating or cooling in a home via their internal control system. However, while most of the smart loads in a residential dwelling are aware of their own power consumption and the current state of their own operation, they are not aware of the power consumption of other loads operating at the same time in the residential dwelling, or the overall power consumption by all the loads on the load center. As such, these smart loads are not aware when the power demand increases to a point where the load center becomes overloaded and needs to shed one or more loads to avoid a thermal trip.

The energy management system of the present disclosure is configured to leverage the communication capability of the smart devices to coordinate a decrease in their power demand on the load center. The energy management system monitors temperature change within the load center and also the load center energy level, and determines an amount of time remaining until load shedding is required to prevent thermal tripping. The energy management system also determines a power margin by which the load center energy level exceeds the load center rating or a permissible percentage thereof. The energy management system then uses the communication capability of the smart devices to provide them with the remaining time until load shedding is required and/or the power margin to allow these smart devices to make their own decisions regarding reducing their power consumption. As an example, upon being notified that the load center is operating in an overloaded state and only a certain amount time remains until load shedding is required to ensure a thermal trip does not occur, many of these devices can optimize (i.e., minimize) their power consumption by transitioning from a higher power state to a lower power state, switch to a temporary stand-by state, or pause their operation until informed that they can again resume normal operation.

In some embodiments, the energy management system may not be able to communicate with a load, either because that load does not have communication capability or is simply unresponsive. In that case, the energy management system can communicate with a communication and control (C&C) breaker or relay in the load center for that load to cause the C&C breaker or relay to disconnect power to the load until such time when the overall current in the load center is reduced below a threshold setpoint, and thereby maintain the load center in a non-tripped state.

In some embodiments, the energy management system can prioritize which smart loads to provide energy information to and coordinate power reduction with first before communicating with the C&C breakers to disconnect power to the loads. This allows the prioritized loads to control their own operation to optimize (i.e., decrease) their power consumption so as to avoid having their power interrupted while in the middle of an operation cycle, and potentially be damaged, due to a trip.

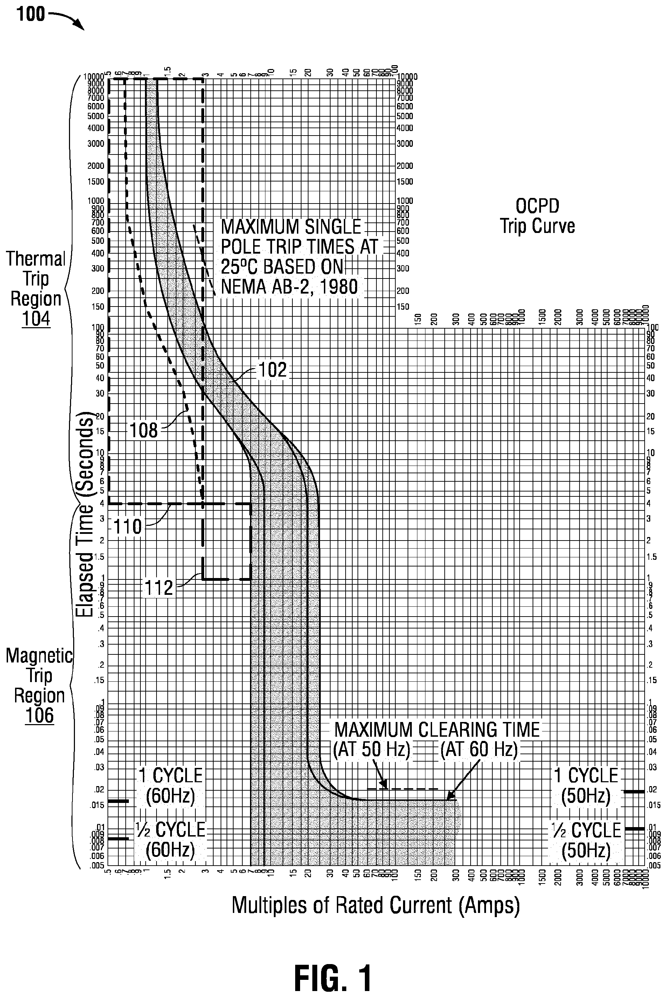

Referring now to FIG. 1, a typical trip curve 100 is shown, also called a time-current curve, for a model of a thermomagnetic circuit breaker often used as a main breaker in residential dwelling load centers (e.g., a molded case circuit breaker (MCCB)). The trip curve 100 is basically a thermal model of the thermomagnetic circuit breaker, with elapsed time indicated along the vertical axis, and multiples of rated current, which is 100 Amps here, indicated along the horizontal axis. The shaded area represents a trip area 102 that indicates the amount of current and the time, on a logarithmic scale, at which the circuit breaker is expected to trip at that current. The leftmost boundary of the trip area 102 represents a minimum time until the circuit breaker trips at a given current and the rightmost boundary represents a maximum time until the circuit breaker trips at that current.

As is well known, thermomagnetic circuit breakers like the one discussed above have a thermal trip mechanism in the form of a bimetallic strip, and also a magnetic trip mechanism in the form of a magnetic coil or solenoid. Current flowing through the bimetallic strip, also called a cantilever, heats the bimetallic material and causes it to bend due to the difference in thermal expansion characteristics of the two metal materials. This characteristic is useful for protecting against smaller overcurrents, typically less than 7X the rated current, as indicated by a thermal trip region 104. The magnetic coil or solenoid, on the other hand, reacts much faster, almost instantaneously, making it useful for protecting against larger overcurrents, typically from 7X the rated current up to tens or even thousands of Amps, as indicated by a magnetic trip region 106.

From the above trip curve 100, the present inventor realized that the load center can be operated beyond its rated current (i.e., in an overloaded state) for a period of time without tripping the circuit breaker so long as the load center current level and duration do not push the circuit breaker into the trip area 102 of the thermal trip region 104. The load center current level and duration can be monitored and, if these values start getting close to the trip area 102, then load shedding may commence to reduce the current level and increase the remaining time until tripping. In addition, an elevated ambient temperature within the load center can significantly increase the heating of the bimetallic material in the circuit breaker, potentially causing the bimetallic strip to bend after only a brief and/or small amount of current. Thus, the ambient temperature within the load center can also be monitored and its effect on the bimetallic material in the circuit breaker can be factored into the amount and duration of current that can flow without tripping the circuit breaker.

To facilitate the above monitoring and trip avoidance, a thermal shedding time, indicated by curve 108, may be calculated or derived within the thermal trip region 104 to provide a margin or threshold against the trip area 102. Tripping can be avoided with a high degree of confidence so long as the load center current level and duration do not extend beyond the thermal shedding time curve 108. This can be accomplished by shedding certain loads from the load center as needed to maintain the load center current at a level below the thermal shedding time curve 108.

As a visualization aid, a thermal shedding region can be defined, indicated by box 110 in FIG. 1, that is coterminous with the thermal trip region 104 up to about 3X the rated current. As long as the load center current level and duration, after factoring in the load center ambient temperature, are within this thermal shedding region 110, then sufficient time remains for decisions to be made, based on the thermal shedding time curve 108, regarding whether to commence load shedding and which loads to shed to avoid a thermal trip. Similarly, a quick or immediate shedding region can be defined, indicated by box 112 in FIG. 1, that extends from the start of the magnetic trip region 104 at about 3X the rated current down to about one second of elapsed time. If the load center current level and duration are within this quick shedding region 112, then load shedding should begin immediately, within about 1 to about 5 seconds in some embodiments, depending on the specific implementation, to avoid a magnetic trip.

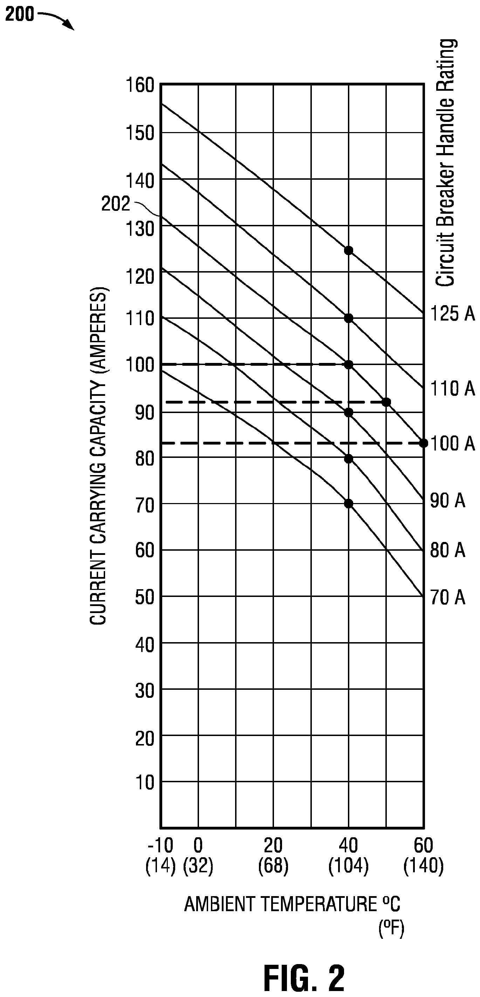

FIG. 2 graphically illustrates the potential effects of elevated ambient temperature in more detail via an example current-ambient temperature chart 200. In the chart 200, circuit breaker current carrying capacity is listed along a left vertical axis, handle rating along a right vertical axis, and outdoor ambient temperature along a horizontal axis. A series of curves are displayed on the chart 200, each curve depicting how circuit breaker current carrying capacity changes with ambient temperature for thermomagnetic circuit breakers of the type often used as main breakers in residential dwelling load centers. For example, curve 202 represents a circuit breaker having a 100 Amp handle rating at a typical or normal ambient temperature, which is 40° C according to industry standards (e.g., IEC 60898). The current carrying capacity for this circuit breaker drops down to about 92 Amps when the ambient temperature increases to 50° C, and down to about 84 Amps when the ambient temperature increases to 60° C, as indicated by the horizontal dashed lines. Other current carrying capacity curves in the chart 200 exhibit similar behavior.

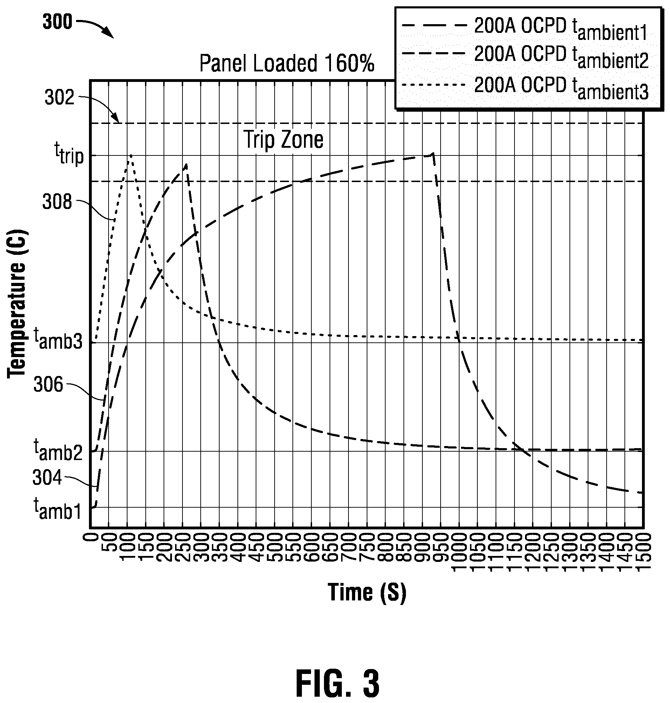

FIG. 3 shows an example temperature-trip time graph 300 that further illustrates the effects of elevated ambient temperature on thermomagnetic circuit breakers. In the graph 300, the vertical axis represents temperature while the horizontal axis represents elapsed time. The ambient temperature in this example is the temperature in the load center where a typical thermomagnetic main breaker is installed. This temperature tracks or otherwise corresponds to the temperature of the bimetallic material in the trip mechanism within the main breaker itself. A trip zone 302 represents the ambient temperature range where the main breaker trips. Graphs 304, 306, and 308 represent low ("ambient 1"), medium ("ambient 2"), and high ("ambient 3") ambient temperature, respectively. The load center here is assumed to be operating in an overloaded state, with current flowing through the load center at about 160 percent of the main breaker rating. As the graphs 304, 306, and 308 show, the load center can operate in this overloaded state for nearly 950 seconds in low ambient temperature compared to only about 250 seconds and only about 100 seconds in medium and high ambient temperature, respectively.

Based on the foregoing, care should be taken to ensure an adequately sized circuit breaker is used as the main breaker, taking into account the ambient temperature in the load center where the main breaker is installed (e.g., indoor versus outdoor installation, total number of circuit breakers in the load center, etc.). To this end, it is well known in the art to derate a circuit breaker current rating based on the ambient temperature in the load center. Re-rating the circuit breaker can be done by applying a re-rating factor, R, to the handle rating of the circuit breaker used as the main breaker in the load center. The re-rating factor for a given ambient temperature and circuit breaker rating may be derived from current-ambient temperature charts similar to the chart 200 of FIG. 2 using, for example, curve fitting techniques known to those skilled in the art (e.g., linear regression, smoothing, exponential functions, etc.). Alternatively, the data from the current-ambient temperature charts may be stored in one or more lookup tables for subsequent access as needed.

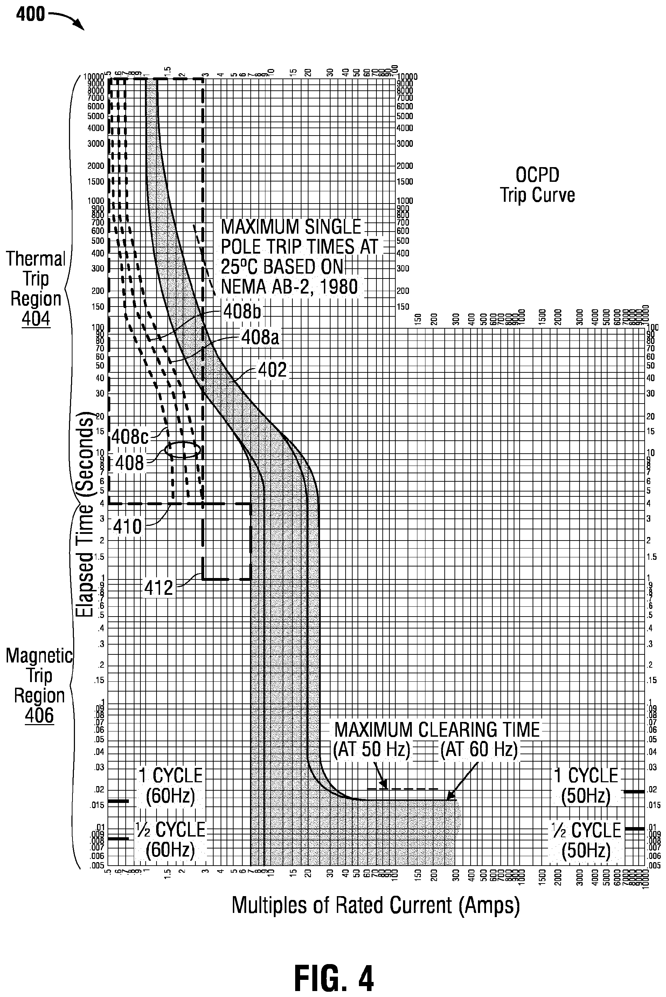

FIG. 4 illustrates an example of how a re-rating factor may be applied to account for elevated ambient temperature in a trip curve 400 similar to the trip curve 100 from FIG. 1. Like its counterpart from FIG. 1, the trip curve 400 shows a trip area 402 that indicates the amount of current and the time, on a logarithmic scale, at which the circuit breaker is expected to trip at that current. As before, the load center current level and duration can be monitored and, if these values start getting close to the trip area 402, then load shedding may commence to reduce the current level and increase the remaining time until tripping.

To facilitate monitoring of the load center current level and duration, several thermal shedding time curves may be derived or otherwise defined, as indicated at 408, to account for any temperature increases within the load center that may affect trip time. In the present example, curve 408a represents thermal shedding time for a typical or normal ambient temperature within the load center, which is 40° C for the purposes herein. Curve 408b represents thermal shedding time when the ambient temperature within the load center has increased to 50° C, and curve 408c represents thermal shedding time when the ambient temperature within the load center has increased to 60° C. These latter thermal shedding time curves 408b and 408c reflect a re-rating of the load center current by an appropriate re-rating factor to account for the effects of the higher ambient temperatures on the trip mechanism of the circuit breaker. Tripping may then be prevented with a high degree of confidence so long as the load center current level and duration do not extend beyond an applicable one of thermal shedding time curves 408.

As a visualization aid, a thermal shedding region may again be defined, indicated by box 410 in FIG. 4, that is coterminous with the thermal trip region 404 up to about 3X the rated current. As long as the load center current level and duration are within this thermal shedding region 410, then sufficient time remains for decisions to be made, based on the thermal shedding time 408, regarding whether to commence load shedding and which loads to shed to avoid a thermal trip. Similarly, a quick shedding region may also be defined, indicated by box 412 in FIG. 4, that extends from the start of the magnetic trip region 404 at about 3X the rated current down to about one second of elapsed time. If the load center current level and duration are within this quick shedding region 412, then load shedding should begin immediately to avoid a magnetic trip.

The above scheme leverages the fact that most loads operate in cycles, meaning they turn On for a certain time interval, then enter an Off or a low-power state for a certain time interval, then turn back On again, and so forth. If a load turns On for only a few seconds before it enters an Off or in a low-power state, then it is feasible to allow that load to overload the load center for those few seconds, after which the load center will return to being underloaded again. In some embodiments, an estimate of the amount of overload (e.g., an overload percentage) can be determined and, based on the thermal model of the circuit breaker (i.e., trip curve 400), an estimate of the time until the circuit breaker trips can also be determined. This time estimate can then be used to determine how long a given load can be maintained in an On state and whether it can be allowed to finish its On cycle without interruption. Such an arrangement allows embodiments of the present disclosure to delay interruption of a given load long enough so that the load may not need to be interrupted at all, or at least minimize the interruption time, which can increase user or homeowner satisfaction with operation of the system or equipment.

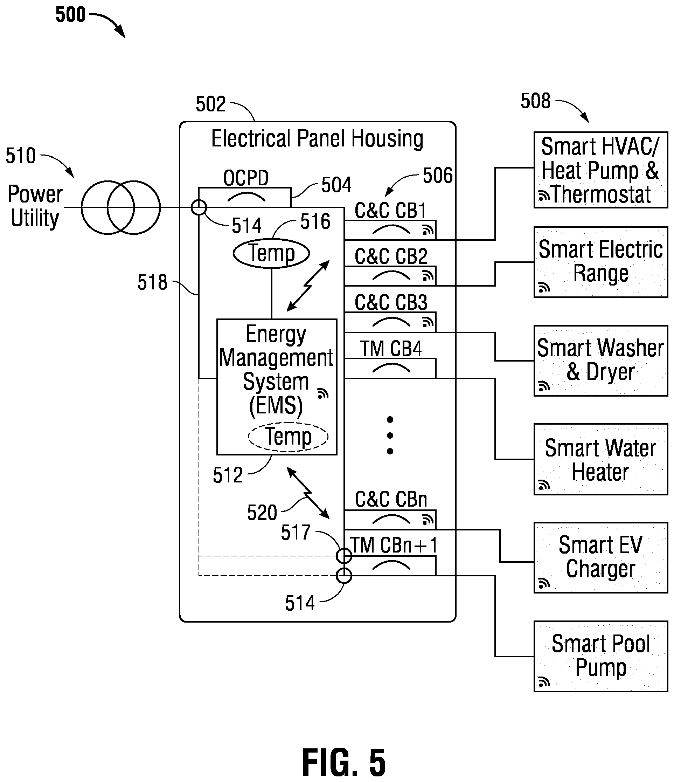

Referring next to FIG. 5, an example load center 500 is shown that can operate in an overloaded state while minimizing or eliminating thermal tripping in accordance with embodiments of the present disclosure. The load center 500 in this example resembles a typical electrical panel for a residential dwelling insofar as there is panel housing 502 and several electrical switching and protection devices installed within the housing 502. Thus, there is a main breaker 504 that serves as an overcurrent protection device (OCPD) for the entire load center 500, and a series of branch breakers 506 that provide protection for various electrical loads 508 at the residential dwelling. Power for these electrical loads 508 comes from a utility power source 510, such as an electrical power plant. It should be noted that although a residential load center 500 is shown in this example, those having skill in the art will appreciate that the principles herein are also applicable to commercial and other types of nonresidential load centers.

In the example of FIG. 5, the main breaker 504 may be a typical thermomagnetic circuit breaker, while the branch breakers 506 may include a combination of controlled branch devices and relays, such as communication and control circuit breakers, labeled "C&C CBn," as well as non-controlled branch devices and relays, such as thermomagnetic circuit breakers, labeled "TM CBn," where "n" represents the circuit breaker number. Other types of devices may also be used as the OCPD and/or the branch breakers, such as surge protectors and other electrical switching and protection devices. The use of C&C breakers and relays is particularly advantageous, however, as these so-called "smart" circuit breakers and relays feature a number of advances over traditional breakers and relays. For example, C&C circuit breakers and relays can measure and log the amount of current flowing to their respective loads, and can transmit this information in real time to a remote monitoring and control application over a wired or wireless communication network (e.g., Modbus, DNP3, BACnet, Wi-Fi, Bluetooth, ZigBee, etc.). In a similar manner, C&C circuit breakers and relays can also be remotely controlled by a monitoring and control application to disconnect or shed their loads, and subsequently reconnect their loads, as needed.

The loads 508 connected to the load center 500 of FIG. 5 may include a mix of smart loads and traditional, classic loads. In the example shown here, the loads 508 includes a smart HVAC/heat pump and thermostat, a smart electric range, a smart washer and dryer, and a smart water heater. In the example, however, additional loads were subsequently added to the load center 500, including a smart EV charger and a smart pool pump, that were not accounted for at the time the load center 500 was installed. As a result, these additional loads may cause the amount of current flowing through the load center 500 to exceed its current rating when all the loads 508 are running at the same time. When this happens, depending on the overcurrent level and duration, the overload may cause the main breaker 504 to trip and interrupt current flow to every load 508.

In accordance with embodiments of the present disclosure, the load center 500 is equipped with an energy management system (EMS) 512 that can mitigate the above overload situation. The energy management system 512 is configured to monitor the load center energy level, which is the energy level that passes through the main breaker 504, and also the energy level passing through certain branch breakers 506 to their respective loads 508. To this end, an energy sensing device 514, which may be a current meter or a simple current transformer in some embodiments, is installed at the main breaker 504 to measure the amount of energy passing through the main breaker 504. Similarly, a temperature sensing device 516, which may be a temperature sensor or a simple thermistor in some embodiments, is installed within the panel housing 502 near the main breaker 504 to measure panel temperature, which is the ambient temperature within the panel near the main breaker 504. In some embodiments, the temperature sensing device 516 may be provided as an embedded device in the energy management system 512 (see dashed oval) instead of a separate sensing device. The energy information and the panel temperature information may then be transmitted to the energy management system 512 in real time over an appropriate connection 516 to monitor the load center ambient temperature and energy level. Similar energy information may be transmitted in real time from the branch breakers 506, either over a wireless connection 518 from the C&C breakers (i.e., CB1, CB2, CBn, etc.) that come equipped with such capability, or via an optional energy sensing device 514 and/or other optional energy sensing devices 517 that may be installed at selected thermomagnetic breakers. Based on the ambient temperature and energy information, the energy management system 512 can determine an amount of time that the load center 500 may be operated in an overloaded state without reaching a point that causes thermal tripping of the main breaker 504.

Thus, by keeping track of the load center ambient temperature and energy level, and hence the thermal increases and decreases in the load center 500, the energy management system 512 can determine when to disconnect certain individual loads 508, and can also coordinate with certain individual loads 508 to reduce their own power consumption (i.e., self-reduce), in order to bring the load center energy to a level where the main breaker 504 does not trip. As alluded to above, the ability to avoid interruptions of the various loads 508 provides significant benefits. Frequent interruptions can cause damage to certain loads 508 and their normal operation, which can reduce their lifetime and/or incur additional maintenance cost to the homeowner or user. Keeping these interruptions, or nuisance trips, to a minimum helps improve user satisfaction and also keeps these loads 508 running normally, as well as preventing the load center 500 from shutting down power for the entire residential dwelling in the event the homeowner needs to use power temporarily above the rated amount.

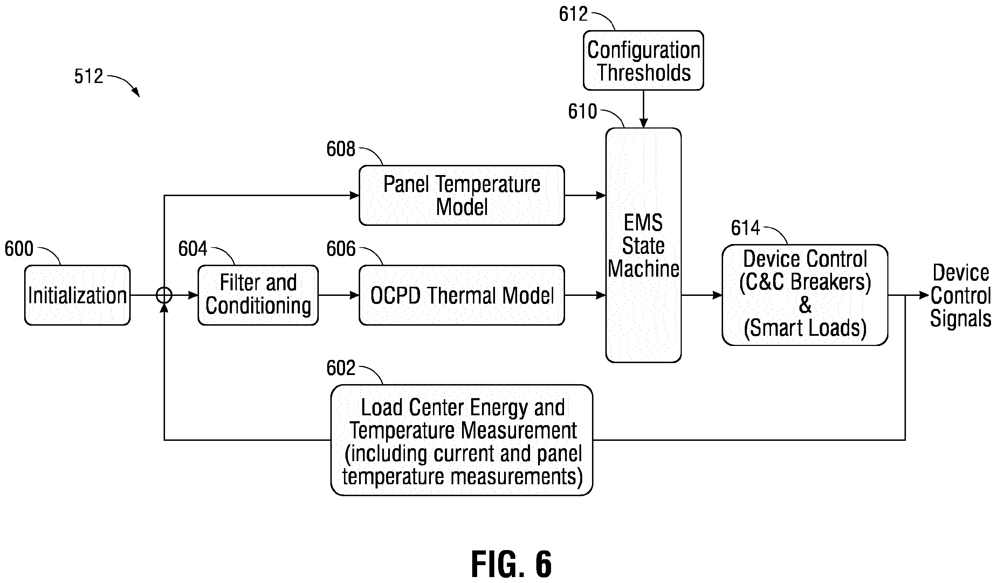

FIG. 6 is a functional block diagram illustrating an example implementation of the energy management system 512 in accordance with embodiments of the present disclosure. As can be seen, the system 512 includes an initialization block 600 that is configured to set up or prepare the system to begin operation, such as initializing variables, allocating appropriate memory and processing resources, setting up configuration parameters, and similar tasks. The system 512 also includes a load center energy and temperature measurement block 602 configured to receive or acquire temperature and energy level measurements from the main breaker 504 and one or more, or all, of the branch breakers 506, as discussed above. The measurements may be in the form of analog signals in some embodiments, or they may be in the form of digital data in some embodiments, depending on the particular application. A filter and conditioning block 604 operates to enhance, clean, and otherwise remove any noise or unwanted components from the energy level measurements, such as by applying an exponential moving average to the measurements.

The energy management system 512 also includes a thermal model block 606 that operates to apply a thermal model of the OCPD to the filtered and conditioned load center energy measurements. The OCPD in the present example is the main breaker 504 and, in some embodiments, the load center energy level being monitored may be the amount of current passing through the main breaker 504. In these embodiments, the thermal model may resemble a trip curve for a thermomagnetic circuit breaker similar to the trip curve 400 from FIG. 4, or a data representation of such a trip curve (e.g., a data table). In other embodiments, the load center energy level that is monitored may be voltage, or wattage, or resistance, or other properties that can provide an indication of the thermal state of the main breaker 504, or the bimetallic strip therein. In either case, the thermal model block 606 uses the load center energy measurements and the thermal model of the OCPD to generate several energy parameters that provide an indication of the current thermal state of the main breaker 504, as discussed further below.

The energy management system 512 further includes a panel temperature model block 608 that operates to apply a temperature model to the ambient temperature measured within the panel housing 502. The ambient temperature measurements are preferably obtained near the main breaker 504, although this is not required. In some embodiments, the temperature model may resemble a current-ambient temperature chart for a circuit breaker similar to the chart 200 in FIG. 2, or a data representation of such a chart (e.g., a data table). In other embodiments, a proxy for the ambient temperature within the panel housing 502 may be derived and used as the ambient temperature, for example, by comparing the total load center energy level entering the main breaker 504 versus the total energy level leaving the various branch breakers 506. In either case, the panel temperature model block 608 uses the load center ambient temperature measurements and the temperature model to determine a re-rating factor for the main breaker 504, as discussed further below.

A state machine 610 may be included in the energy management system 512 in some embodiments to process the re-rating factor determined or provided by the panel temperature model block 608 and the energy parameters generated or provided by the thermal model block 606. A state machine, as those skilled in the art understand, includes any computational device that can transition from one state to another in response to one or more inputs. Such a state machine 610 may be implemented in hardware, software, or some combination thereof (i.e., firmware), including as a lookup table, in some embodiments. The state machine 610 operates to compare the parameters provided by the thermal model block 606, after re-rating to account for the ambient temperature in the panel, against one or more load center constraints and configuration thresholds stored in a configuration threshold database 612. Based on this comparison, the state machine 610 determines whether the load center is in an overloaded state, whether sufficient time remains for making decisions regarding load shedding to avoid a thermal trip, or whether load shedding should begin immediately to avoid a magnetic trip.

A device control block 614 operates to implement any decisions arrived upon by the state machine 610. The device control block 614 is configured to communicate with and remotely control one or more, or all, of the branch breakers 506 to shed their respective loads 508, if needed, and also to communicate with one or more, or all, of the smart loads in the loads 508 to reduce their power consumption. In some embodiments, the communication and coordination with the loads 508 is performed in an ordered sequence that is established based on a predefined priority list ($L$[n]), which load priority list may be stored in the configuration threshold database 612 in some embodiments. Thus, as an example, if the state machine 610 determines that the load center 500 is in an overloaded state and the reduction in power consumption needs to occur to avoid thermal tripping of the main breaker 504, then the state machine 610 issues or otherwise sends an appropriate command or control signal to the device control block 614. The device control block 614 may thereafter instruct or otherwise communicate an appropriate device control signal to the smart EV charger 508 to reduce its power consumption first, followed by the smart HVAC/heat pump and thermostat if needed, followed by the smart electric range if still needed, and so forth. Likewise, the device control block 614 can also communicate with each of these smart loads 508, respectively, to inform them that the load center is no longer operating in an overloaded state so normal operation may be resumed, when thusly indicated by the state machine 610.

As alluded to earlier, the energy management system 512 (via the state machine 610 and the device control block 614) can communicate with the various loads 508 using Zigbee, BLE, Matter over WiFi, Matter over Thread, OCPP, openHAB, or any home automation protocol known to those skilled in the art. For example, during commissioning of the loads 508, each device added to the load center 500 can register with the energy management system 512 and specify the communication protocol used to communicate with the device. In this way, the energy management system 512 can support multiple different smart loads 508 using multiple different communication protocols. For example, the energy management system 512 can communicate with the smart HVAC/heat pump and thermostat via Matter over Thread, while communicating with the smart EV charger via OCPP, and so forth.

In some embodiments, the shedding of the loads 508 is also performed in an ordered sequence that is established based on the same predefined priority list (L[n]) stored in the configuration threshold database 612 in some embodiments. Thus, for example, the state machine 610 may determine that load shedding still needs to occur despite the attempted communication and coordination with the loads 508 because one or more loads 508 failed to respond, or because the response was insufficient. In that case, to avoid thermal tripping of the main breaker 504, the state machine 610 may issue or otherwise send an appropriate command or control signal to the device control block 614 to shed those loads 508. The device control block 614 thereafter instructs or otherwise communicates an appropriate device control signal to the branch breaker for the EV charger to shed its load first, followed by the branch breaker for the HVAC unit if needed, followed by the branch breaker for the electric range if still needed, and so forth. Likewise, the device control block 614 can also communicate with the branch breakers 506 to reconnect their respective loads 508 when thusly indicated by the state machine 610.

In some embodiments, as discussed above, the thermal model used by the thermal model block 606 may resemble a trip curve for a thermomagnetic circuit breaker similar to the trip curve 400 in FIG 4. As also mentioned above, the energy level being monitored and modeled by the thermal model in the present example is specifically current level. Such a thermal model involves using the specific heat transfer of the particular bimetallic materials used in the circuit breaker, as generally expressed by Equation (1), Newton's Law of heat loss, as expressed by Equation (2), and the Ohmic heat generation of the bimetallic strip, as expressed by Equation (3):

$$Q(t) = m * C * dT/dt \tag{1}$$

where m is the mass of the bimetallic strip, c is the specific heat capacity of the metallic material(s), and $dT/dt$ is the rate of change of temperature $T$ over time.

$$Q_{loss}(t) = h * A * (T - T_{ambient}) \tag{2}$$

where h is the convective heat transfer coefficient, A is the surface area of the bimetallic strip, $T$ is the temperature of the bimetallic strip, and $T_{ambient}$ is the ambient temperature difference.

$$Q_{heat}(t) = R_{OCPD} * i_{OCPD}^2 * t \tag{3}$$

where $R_{OCPD}$ is the main breaker impedance and $i_{OCPD}$ is the main breaker current.

It should be noted that a bimetallic strip when fashioned in a cantilever cut has a thermal deflection due to the temperature change over time. As the bimetallic strip in a circuit breaker is constructed in cantilever strips and calibrated based on a specific current rating and specific temperature, the deflection can be determined from the temperature change expressed in the equations above.

Other techniques for implementing the thermal model of the thermal model block 606 include the use of one or more lookup tables containing model values derived from empirical data. The use of such lookup tables for the thermal model may be advantageous in some embodiments compared to calculating or computing the above heat equations, Equations (1) to (3), to derive the model values, as different OCPDs have different cantilever dimensions and different bimetallic materials, and the heat equations for these OCPDs are different due to different specific heat coefficients, bimetal mass, and calibration settings, and the like. Likewise, the re-rating factors determined or provided by the panel temperature block 608 may be implemented using one or more lookup tables containing model values derived from empirical data or from existing current-ambient temperature charts. The state machine 610 may then retrieve any model values that it may need to perform its processing for the particular main breaker 504 involved from one or more of the aforementioned lookup tables.

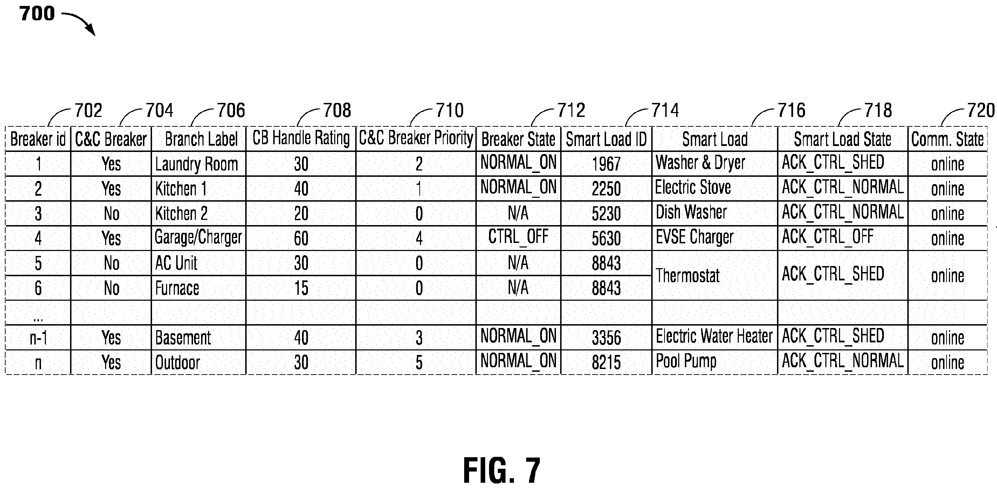

FIG. 7 illustrates an example of a circuit breaker-to-load map in the form of a device table 700 that may be used by the state machine 610 and the device control block 614 with respect to the branch breakers 506 and their respective loads 508. Such a device table 700 may be created automatically via a breaker discovery process known to those having skill in the art and/or manually by a technician during commissioning of the load center 500, and stored locally or remotely for use by the state machine 610 and the device control block 614. The information in the device table 700 may then be updated automatically by the state machine 610 and/or the device control block 614 as needed.

As can be seen, the device table 700 has several rows and columns that contain information about the breakers 506 and their respective loads 508 installed in the load center 500. The columns in the present example include a breaker ID column 702 that lists the breaker identification, a C&C breaker column 704 that indicates whether the breaker is a C&C breaker, a branch label column 706 that contains the branch label for each breaker, a handle rating column 708 that specifies the handle rating for the breaker, and a breaker priority column 710 that indicates the priority level for each breaker. In the present example, the priority level ranges from a highest priority of "0" to a lowest priority of "5," although other priority ranking schemes may be used within the scope of the present disclosure. Also present are a breaker state column 712 that indicates a current breaker state (e.g., On, Off, etc.), a smart load ID column 714 that lists the smart load identification, a smart load type column 716 that identifies a device type of the load, a smart load state column 718 that indicates a current load state (e.g., Shed, Normal, Off, etc.), and a smart load communication state column 720 (e.g., Online, Offline, etc.).

The main breaker in most modern residential load centers like the load center 500 are rated for 200 Amps (A). But as the circuit breaker handle rating column 708 shows, the total handle rating for the breakers in the device table 700 adds up to 265 A, which exceeds the load center rating. The amount by which a load center energy level exceeds the load center rating or a specified percentage thereof vis-à-vis a rerating factor is referred to herein as a "power margin." Operating the load center with a non-zero power margin is not normally permitted, but is allowed in the present example by virtue of the load center 500 being equipped with dynamic load control capability via the energy management system 512. The energy management system 512 is configured to continuously manage the energy level in the load center 500 in real time by coordinating with the loads 508 therein to bring the power margin down to either zero or at least a level that avoids thermal tripping of the main breaker. If energy management system 512 detects that the power consumption begins to approach the thermal tripping level, the system leverages the communication capability of the smart loads 508 and breakers 506 to communicate a request to reduce power consumption and, if needed, to shed the loads. The request communicated to the smart loads 508 contains information that allows the smart loads to self-reduce their power consumption and thereby decrease the overall power consumption without abruptly interrupting their operations.

In the example device table 700, the smart load state column 718 shows that some smart loads have acknowledged a request from the energy management system 512 to reduce power consumption, but the EVSE Charger (breaker ID 4) has not sent an acknowledgment within a predefined acknowledgment period, as indicated by the "NAK_CTRL_OFF" state indicator in column 718 for the EVSE Charger. Since some smart loads are connected to non-C&C breakers, the energy management system 512 needs to communicate with these loads directly. If these loads do not acknowledge the request from the energy management system 512 within the predefined acknowledgment period, then the system may request other smart loads in the load center to either turn themselves off or switch to a lower power state. If these smart loads also do not timely acknowledge the request, then the energy management system 512 may command the respective C&C breakers for these loads to interrupt their power (i.e., shed those loads).

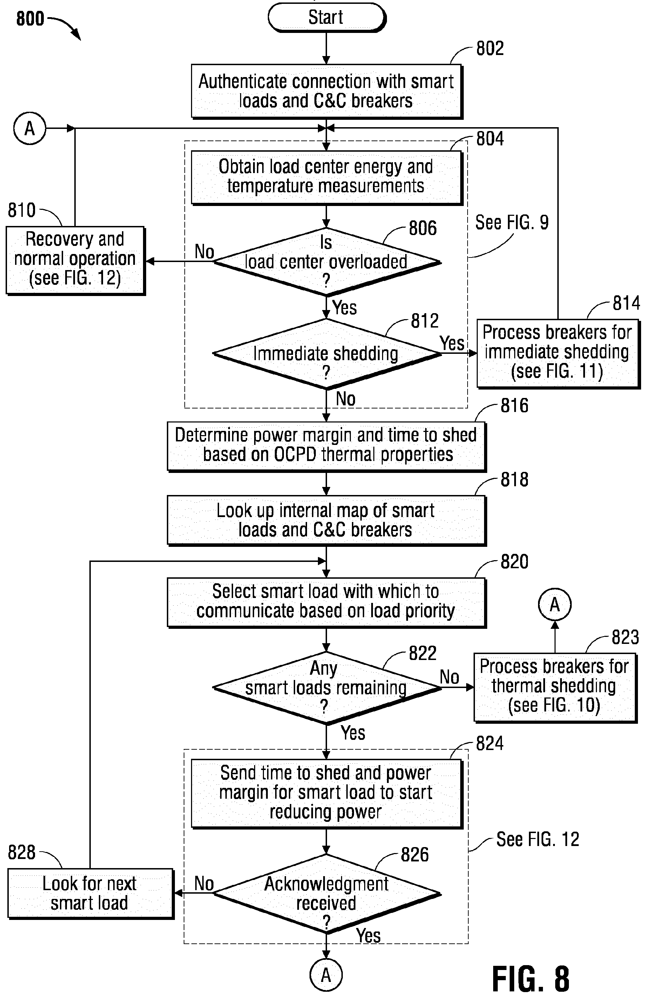

FIG. 8 shows an example method in the form of a flow diagram 800 that may be used by or with the energy management system 512 and the state machine 610 therein to communicate a request for power consumption reduction to the smart loads. The request may be sent to the smart loads based on a priority list (L[n]) containing load priorities that may be specified by a user (see column 710 of device table 700 in FIG. 7). This request may contain various information useful to the smart loads, including a power margin and a thermal shedding time, or time-to-shed ($T_{shed}$), that provides an estimate of the time within which one or more loads should be shed to avoid a thermal trip. Upon receiving the request, each smart load is configured to try and self-reduce its power consumption as much as it can within the time-to-shed window considering the current operation cycle or power state of the smart load. Preferably the power consumption reduction is by an amount at least equal to the power margin, although it is possible the smart load may not be able to reduce power consumption at all, or interrupt its current operation cycle without significant risk of damaging itself, depending on the type of smart load.

The flow diagram 800 thus represents, at a high level, a decision-making process for managing overload protection of a load center like the load center 500 initially by using communications with the smart loads therein, then resorting as a fallback to communication with their respective C&C breakers to interrupt power in case the smart loads do not respond or are unable to achieve a sufficient level of power reduction. Examples of protocols that may be used by the energy management system 512 to communicate with the smart loads include Zigbee, BLE, Matter over WiFi, Thread, OCPP, openHAB, or any home automation protocol known to those skilled in the art can be utilized to communicate with specific smart loads. In the event a protocol does not include certain fields related to controlling device power consumption, such as time-to-shed or power margin, adding those fields as a customization to the protocol is well within the ability of those skilled in the art.

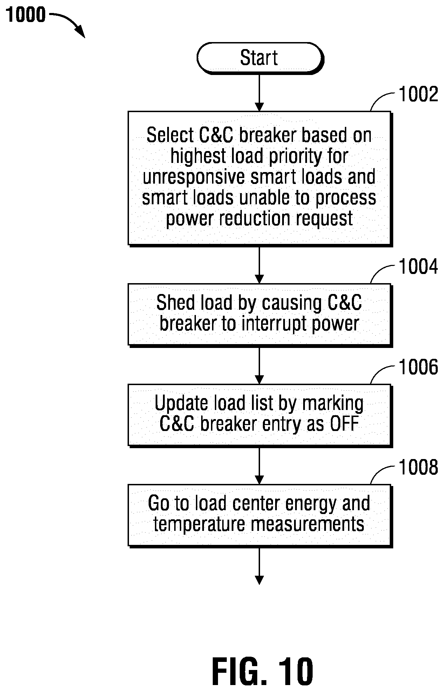

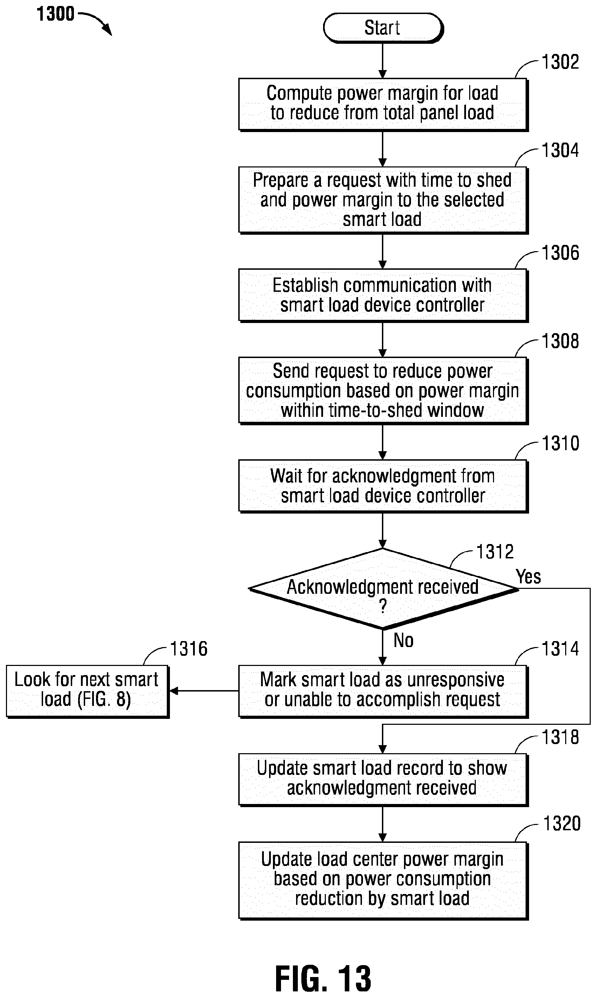

In the example of FIG. 8, it can be seen that once the energy management system 512 receives an acknowledgement from a smart load within a predefined acknowledgment period (e.g., 0.5 sec, 1.0 sec, 1.5 sec, etc.), indicating that the smart load will attempt to reduce power consumption within a time-to-shed window, the system 512 can resume its normal monitoring operation. If it turns out that the smart load cannot reduce power consumption by any amount at all, or an amount that reduces the power margin by a predefined percentage (e.g., 35%, 40%, 45%, 50%, etc.) within the time-to-shed window due to the power requirements of the current operation, then depending on the smart load type and capability, the smart load may be configured to notify the system 512 to look for other smart loads in the device table 700 that have not been contacted yet to reduce their power consumption. The system 512 may then start requesting other smart loads (e.g., the next load in the priority list (L[n])) to perform a power consumption reduction similar to the previous smart load using the same or a different time-to-shed window or power margin based on the time-to-shed window and power margin calculations derived from the thermal trip curve of the main breaker (OCPD) and other load center parameters. Also, in some cases, the device controller for a smart load may refrain from acknowledging a request to self-reduce power consumption because it has determined, for example, that it is already in its lowest power consumption state and cannot reduce consumption further. In that case, if an acknowledgement is not received from the smart load within the predefined acknowledgment period, the system 512 is configured to begin requesting other smart loads 508 to reduce power consumption as discussed above. If none of the smart load device controllers acknowledge the request to reduce power consumption, then the system 512 is configured to begin communicating with the individual breakers of the smart loads, based on the same priority scheme, to turn off (i.e., trip) in order to disconnect power to the smart loads (see FIG. 10). The system 512 is then configured to update the state of each smart load and breaker in an internal breaker-to-load map (e.g., device table 700) so that the smart load selection process can proceed to other loads until the load center energy level is reduced to a threshold level that avoids thermal tripping of the main breaker (OCPD) (i.e., a thermal shedding threshold) (see FIG. 13).

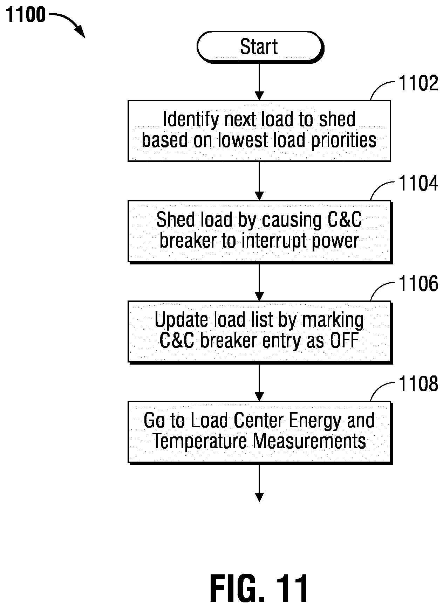

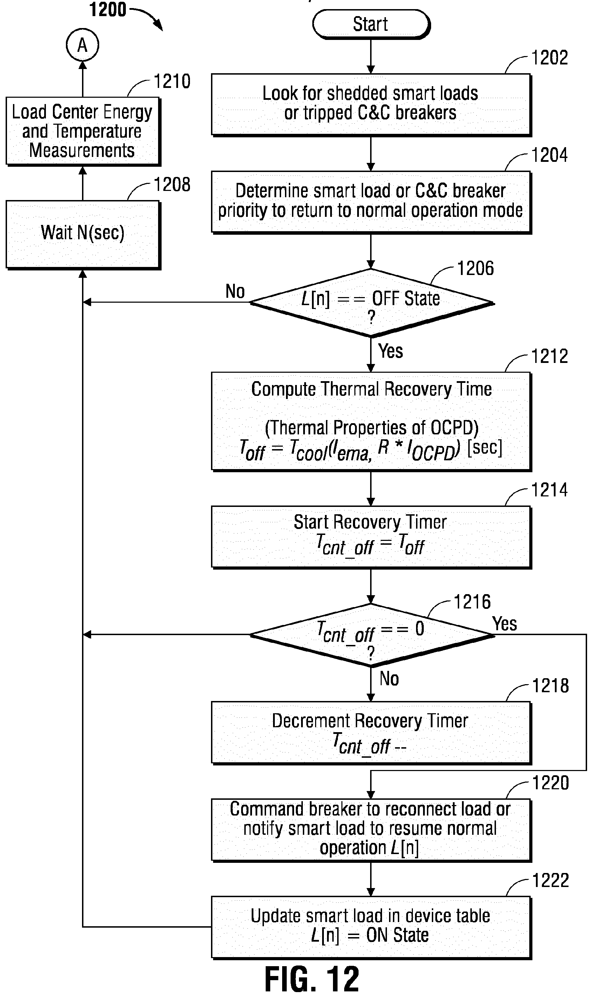

As FIG. 8 shows, the example method generally begins at block 802 where the energy management system 512 establishes and authenticates its connection with the smart loads and C&C breakers in the load center 500 using, for example, one of the dedicated or standard communication protocols mentioned earlier. At block 804, the system 512 obtains a measurement of the load center energy level and panel temperature. At block 806, the system 512 makes a determination whether the load center is operating in an overloaded state based on the load center energy level and panel temperature. If the overloaded state determination is no, then the system 512 proceeds to a recovery and normal operation state at block 810 (see FIG. 12). If the determination is yes, then the system 512 makes a determination whether immediate shedding is required. If the immediate shedding determination is yes, then the system 512 proceeds to block 814 where the C&C breaker selections are processed accordingly (see FIG. 11).

If the immediate shedding determination in block 812 is no, then at block 816, the energy management system 512 determines a time-to-shed ($T_{shed}$) based on the thermal properties of the overcurrent protection device (OCPD) or main breaker for the load center, as discussed further below. At block 818, the system 512 accesses an internal breaker-to-load map (e.g., from a local or remote memory location) that contains a mapping of smart loads and breakers to look up which smart load is connected to which breaker. The internal map may resemble the device table 700 from FIG. 7 in some embodiments. At block 820, the system 512 selects a smart load with which to communicate based on the highest load priority in a predefined priority list (L[n], max(priority)), which may be specified in the internal breaker-to-load map.

At block 822, the energy management system 512 makes a determination whether there are any smart loads remaining to select. If the smart load determination is no, then the system proceeds to block 514 where the breaker selections are processed accordingly (see FIG 10). If the determination is yes, then the system 512 proceeds at block 824 to send the time-to-shed, the power margin, or both, to the selected smart load for the smart load to begin self-reducing power consumption. At block 826, the energy management system 512 makes a determination whether an acknowledgment was received from the smart load. If the acknowledgment determination is yes, then the system 512 proceeds to block 804 to obtain another load center energy measurement. If the determination is no, then the system 512 looks for another smart load with which to communicate at block 828 by returning to block 820 to select a smart load based on the predefined priority list (L[n], *max(priority)*).

As mentioned previously, the time-to-shed ($T_{shed}$), or thermal shedding time, provides an estimate of the time within which one or more loads should be shed in order for the load center main breaker (OCPD) to remain in a non-tripped state. In some embodiments, the energy management system 512 calculates or otherwise estimates the time-to-shed or thermal shedding time ($T_{shed}$), which may be in seconds, based on or using the thermal properties of the main breaker, as follows: $T_{shed} = T_{therm}(I_{ema}, R * I_{OCPD})$, where $T_{therm}$ is a function of the exponential moving average of the load center energy level ($I_{ema}$), the re-rating factor (R), and the load center current rating ($I_{OCPD}$).

In the above example, $T_{therm}$ is a temperature rise function that returns the main breaker's trip time based on the panel ambient temperature rise. Several techniques are available to those having skill in the art for determining $T_{therm}$ as a function of the exponential moving average of the load center energy level ($I_{ema}$), the re-rating factor (R), and the load center current rating ($I_{OCPD}$). For example, $T_{therm}$ may be determined using a lookup table in some embodiments, with the load center energy level ($I_{ema}$) and the load center current rating ($I_{OCPD}$) used as the inputs to the lookup table. The values in such a lookup table may be derived empirically from experimental or observed data in some embodiments, or the values may be derived mathematically using one or more of Equation (1) to (3) in conjunction with the trip curve for the particular circuit breaker involved. Table 1 below shows an example table that may be used as a lookup table for values of $T_{therm}$.

**TABLE 1: $T_{therm}$ Lookup Table**

|  | $R * I_{OCPD}(1)$ | $R * I_{OCPD}(2)$ | ... | $R * I_{OCPD}(n)$ |
|---|---|---|---|---|
| $I_{ema}(1)$ | $T_{therm}(1, 1)$ | $T_{therm}(1, 2)$ | ... | $T_{therm}(1, n)$ |
| $I_{ema}(2)$ | $T_{therm}(2, 1)$ | $T_{therm}(2, 2)$ | ... | $T_{therm}(2, n)$ |
| ... | ... | ... | ... | ... |
| $I_{ema}(m)$ | $T_{therm}(m, 1)$ | $T_{therm}(m, 2)$ | ... | $T_{therm}(m, n)$ |

It should be noted that although the foregoing embodiments and certain other embodiments herein contemplate the use of panel ambient temperature to determine shedding time, embodiments of the present disclosure are not so limited. Those having ordinary in the art will understand that shedding time may also be determined without using panel ambient temperature, for example, in order to reduce processing time and complexity. In some embodiments, the shedding time may instead be derived based on a thermal model of the panel circuit breaker or overcurrent protection device.

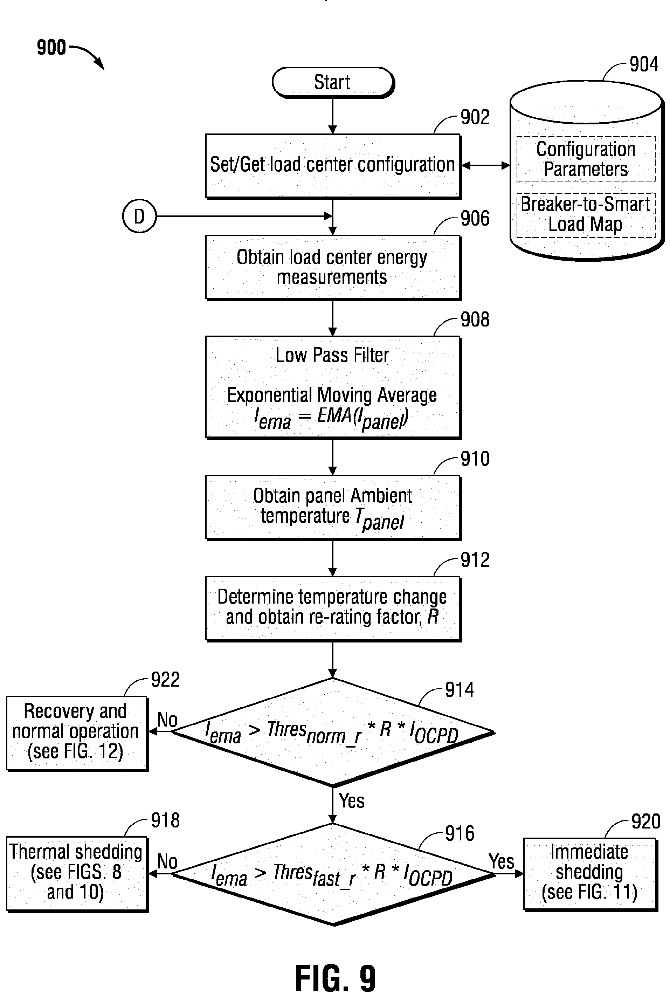

FIG. 9 shows an example method in the form of a flow diagram 900 that may be used by or with the energy management system 512 and the state machine 610 therein to determine whether and when load shedding is needed. The flow diagram 900 generally begins at block 902 where the system 512 obtains one or more configuration parameters for the particular circuit breaker involved (i.e., main breaker 504), or otherwise establishes one or more configuration parameters based on the obtained configuration parameters. The obtained configuration parameters may be acquired from a database 904, which may reside locally in the system 512, or at a remote location on a network. In some embodiments, the internal breaker-to-load map referenced above may also be stored in the database 904 along with the configuration parameters. Such configuration parameters may include, for example, a load center rating (i.e., main breaker handle rating), a thermal model for the load center (i.e., trip curve), a re-rating factor, a temperature model (i.e., current-ambient temperature chart), and any other configuration parameters as needed herein.

At block 906, the energy management system 512 obtains a measurement of the load center energy level, which again is the instantaneous load center current ($I_{panel}$) in the present example, via a current sensing device (i.e., current sensing device 514) installed at the main circuit breaker. The system 512 may similarly obtain a measurement of the energy level in one or more of the loads ($I_{L[n]}$) via their respective branch breakers (i.e., branch breakers 506). At block 908, the system 512 applies a low pass filter to the energy level measurements to remove any temporary spikes that may have occurred during startup of one or more loads (i.e., inrush current). At this point, the system 512 also obtains an exponential moving average of the load center energy level in order to remove any transient measurements that may appear ($I_{ema} = EMA(I_{panel})$).

At block 910, the energy management system 512 obtains a measurement of the ambient temperature within the panel where the circuit breaker is housed via a temperature sensing device (i.e., temperature sensing device 516). This ambient temperature measurement is preferably obtained at about the same time that the energy management system 512 obtains the load center energy level in block 906. At block 912, the energy management system 512 determines whether the panel temperature or ambient temperature in the panel, $t_{panel}$, has increased or decreased relative to the temperature at which the circuit breaker was rated, which is 40° C for most circuit breakers. In some embodiments, it is also possible for the energy management system 512 to instead determine whether the ambient temperature in the panel, $t_{panel}$, has increased or decreased relative to the temperature at which the circuit breaker was commissioned. In either case, the energy management system 512 thereafter obtains a re-rating factor for the circuit breaker based on the change in the panel temperature. In some embodiments, the energy management system 512 may obtain the re-rating factor via a lookup table in the configuration parameters database 904, which may resemble Table 2 below in some embodiments.

**TABLE 2: Re-rating Factor Lookup Table**

|  | Handle Rating(1) | Handle Rating(2) | ... | Handle Rating(n) |
|---|---|---|---|---|
| $t_{panel}(1)$ | R(1, 1) | R(1, 2) | ... | R(1, n) |
| $t_{panel}(2)$ | R(2, 1) | R(2, 2) | ... | R(2, n) |
| ... | ... | ... | ... | ... |
| $t_{panel}(m)$ | R(m, 1) | R(m, 2) | ... | R(m, n) |

At block 914, the energy management system 512 makes a determination whether the exponential moving average of the load center energy level is greater than the load center current rating ($I_{OCPD}$) multiplied by the re-rating factor, R, and a thermal shedding ratio ($Thres_{norm\_r}$). This thermal shedding ratio ($Thres_{norm\_r}$) reflects an amount of overload under which the energy management system 512 needs to begin making decisions about load shedding (i.e., $I_{ema} > Thres_{norm\_r} * R * I_{OCPD}$). The thermal shedding ratio ($Thres_{norm\_r}$) may be selected as needed for a particular application and may be set at unity (i.e., 1/1) in some embodiments, meaning that the amount of overload under which the energy management system 512 needs to begin making decisions about load shedding is 100 percent of the load center rated current. Other examples of the thermal shedding ratio ($Thres_{norm\_r}$) that may be used include 50 percent, 66.7 percent, 75 percent, 90 percent, and the like (i.e., 1/2, 2/3, 3/4, 9/10, etc.). If the thermal shedding ratio determination at block 914 is yes, then the system 512 proceeds to make another determination at block 916 whether the exponential moving average of the load center energy level is greater than the load center current rating ($I_{OCPD}$) multiplied by the re-rating factor, R, and a fast shedding a ratio ($Thres_{fast\_r}$). This fast shedding ratio ($Thres_{fast\_r}$) reflects an amount of overload under which the load center needs to shed a load immediately (e.g., within about 1 to 5 seconds in some embodiments, depending on implementation) to avoid a magnetic trip ($I_{ema} > Thres_{fast\_r} * I_{OCPD}$). This fast shedding ratio ($Thres_{fast\_r}$) may also be selected as needed for a particular application and may be set at 3 (i.e., 3/1) in some embodiments, meaning that the amount of overload under which the load center needs to begin load shedding immediately is 300 percent of the load center rated current. In some embodiments, the system 512 may obtain the values for the thermal shedding ratio ($Thres_{norm\_r}$) and the fast shedding a ratio ($Thres_{fast\_r}$) from the configuration parameters database 904.

If the fast shedding ratio determination at block 916 is no, then the energy management system 512 proceeds to a thermal shedding state at block 918 to begin making decisions regarding thermal shedding (see FIGS. 8 and 10). In some embodiments, the thermal shedding state at block 918 involves the energy management system 512 communicating and exchanging information with the smart loads to request that the smart loads self-reduce their power consumption, as discussed above with respect to FIGS. 8. If instead the fast shedding ratio determination at block 916 is yes, then the system 512 proceeds to an immediate shedding state at block 920 to begin immediate load shedding. On the other hand, if the thermal shedding ratio determination at block 914 is no, then the system 512 proceeds to a recovery and normal operation state at block 922 (see FIG. 12).

FIG. 10 shows an example method in the form of a flow diagram 1000 that may be used by or with the thermal management system 512 in the event thermal shedding is needed, for example, because communicating and coordinating with the smart loads (see FIG. 8) did not reduce the load center energy level to below a threshold level (e.g., $I_{ema} > Thres_{norm\_r} * R * I_{OCPD}$) that would maintain the main breaker (OCPD) in a non-tripped state (see FIG. 9). The method generally begins at block 1002 where the thermal management system 512 is configured to select, based on the predefined priority list (L[n], max(priority)), the breaker for any smart load for which the system 512 either did not receive an acknowledgment of its communication, or for which an acknowledgment was received, but the power reduction performed by the smart load did not lower the overall load center energy level below a threshold level that would maintain the main breaker (OCPD) in a non-tripped state.

At block 1004, the energy management system 512 is configured to send a command or causes a command to be sent to the selected breaker to turn off or otherwise disconnect power to its branch circuit and the smart load thereon. The breaker is expected to be a C&C breaker or a type of breaker that can receive communications from the energy management system 512. At block 1006, the energy management system 512 is configured to update the internal breaker-to-load map to indicate that the selected breaker is now in an OFF state (L[n] = Off state). Thereafter, at block 1008, the energy management system 512 is configured to proceed to obtain another load center energy and temperature measurement (see FIG. 8).

FIG. 11 shows an example method in the form of a flow diagram 1100 that may be used by the thermal management system 512 in the immediate or quick shedding state. The example method shown here is similar to the example method of FIG. 10 except when the system 512 is in the immediate shedding state, no decision is made regarding whether to begin load shedding, but instead load shedding begins immediately. The method begins at block 1102 where the system 512 identifies the next load that needs to be shed based on the predefined load priority scheme (L[n], min(priority)). At block 1104, the system 512 is configured to send a command or causes a command to be sent to the breaker for the identified load to turn off or otherwise disconnect power to its branch circuit and the smart load thereon. The breaker is again expected to be a C&C breaker or a type of breaker that can receive communications from the energy management system 512. The system 512 thereafter proceeds to update the load list at block 1106 to reflect the shedding of that load (L[n] = Off state). The system 512 subsequently proceeds to obtain the next measurements of load center energy and temperature at block 1180.

FIG. 12 shows an example method in the form of a flow diagram 1200 that may be used by or with the thermal management system 512 in the recovery and normal operation state. The method begins at block 1202 where the system 512 finds all loads or breakers that were previously shedded in either the thermal shedding state (FIG. 10) or the immediate shedding state (FIG. 11). At block 1204, the system 512 identifies, based on a predefined load priority scheme (L[n]), the next load or the breaker therefor that needs to be recovered or otherwise returned to normal operation. As before, the load priority scheme may be the same scheme (or schemes) discussed with respect to the device table 700 of FIG. 7, or an alternative load priority scheme may be used.

At block 1206, the energy management system 512 makes a determination whether the load identified in the previous block is still in a shedded state (L[n] = Off state). If the determination is no, then the system 512 waits a predefined number of seconds (N(sec)) at block 1208, and proceeds to obtain the next measurements of load center temperature and energy at block 1210, as discussed with respect to FIG. 8. If the determination is yes, then the system 512 proceeds to calculate or otherwise compute a thermal recovery time ($T_{off}$) at block 1212 as a function of the thermal properties of the circuit breaker ($T_{off} = T_{cool}(I_{ema}, R * I_{OCPD})$). At block 1214, the system 512 starts a recovery timer ($T_{cnt\_off}$) by setting the recovery timer count equal to the thermal recovery time ($T_{off}$).

In the foregoing, the thermal recovery time ($T_{off}$) is a temperature decay function that provides a representation of the circuit breaker temperature decline gradient (i.e., a sort of thermal "memory" of the bimetallic strip) and can be used to indicate how long a load needs to remain Off or shedded before it can be powered On again based on the thermal properties of the particular circuit breaker. The temperature gradient shows that temperature rise within a panel tends to concentrate around the main breaker and the bus bar, as the heat is generated in the center of the panel and moves up towards the main breaker. This concentration of temperature has been confirmed from temperature sensors in the panel, and is measurably higher than the ambient temperature outside the panel. As such, a better determination of trip time or cool off time can be derived based on the temperature within the panel versus the temperature outside the panel. Meanwhile, $T_{cool}(I_{ema}, R * I_{OCPD})$ represents a cooling time that is based on the load center energy level exponential moving average ($I_{ema}$), the load center current ($I_{OCPD}$), and a re-rating factor (R) for the bimetal temperature decay.

As is the case with $T_{therm}$, several techniques are available to those having skill in the art for determining $T_{off}$ as a function of the exponential moving average of the load center energy level ($I_{ema}$) and the load center current rating adjusted for ambient temperature (R * $I_{OCPD}$). For example, $T_{off}$ may be determined using a lookup table in some embodiments, with the load center energy level ($I_{ema}$) and the adjusted load center current rating (R * $I_{OCPD}$) again used as the inputs to the lookup table. The values in such a lookup table may again be derived empirically from experimental or observed data in some embodiments, or the values may be derived mathematically using one or more of Equation (1) to (3) in conjunction with the trip curve for the particular circuit breaker involved. Table 3 below shows an example table that may be used as a lookup table for values of $T_{off}$ The relevant panel temperature decay time $T(t_{panel})$ may then be added to the values of $T_{cool}$ to arrive at the proper value for $T_{off}$.

**TABLE 3: $T_{cool}$ Lookup Table**

|  | R * $I_{OCPD}$(1) | R * $I_{OCPD}$(2) | ... | R * $I_{OCPD}$(n) |
|---|---|---|---|---|
| $I_{ema}$(1) | $T_{cool}$(1, 1) | $T_{cool}$(1, 2) | ... | $T_{cool}$(1, n) |
| $I_{ema}$(2) | $T_{cool}$(2, 1) | $T_{cool}$(2, 2) | ... | $T_{cool}$(2, n) |
| ... | ... | ... | ... | ... |
| $I_{ema}$(m) | $T_{cool}$(m, 1) | $T_{cool}$(m, 2) | ... | $T_{cool}$(m, n) |

At block 1216, the energy management system 512 makes a determination whether the recovery timer ($T_{cnt\_off}$) currently has a count of zero. If the determination is no, then the system 512 decrements the recovery timer ($T_{cnt\_off}$) from its current count at block 1218. The system 512 then waits a predefined number of seconds (N(sec)) at block 1208, and proceeds to obtain the next load center energy measurement at block 1210, as discussed previously. On the other hand, if the determination at block 1216 is yes, then the system 512 proceeds to block 1220 to connect the load that was identified above (L[n], *max(priority)),* for example, by issuing a command to the circuit breaker for that load to connect the load, or communicating with or otherwise notifying the load that the load center is no longer in an overloaded state, and for the load to resume normal operation. The system 512 thereafter updates the load list at block 1222 to reflect that the shedded load has now been connected (L[n] = On state). In the foregoing example, it should be noted that the decrementing of the recovery timer at block 1218 is an implementation detail that is strictly optional and may be omitted in some embodiments.

FIG. 13 shows an example method in the form of a flow diagram 1300 that may be used by or with the energy management system 512 to communicate a request to reduce power consumption that contains a shed time and a power margin to the smart load. The method generally begins at block 1302 where the system 512 is configured to estimate or compute a power margin for the load center. In some embodiments, the energy management system 512 may estimate or compute the power margin, as discussed earlier, based on the amount of power by which the load center exceeds the maximum rated power of the load center or a permissible percentage thereof vis-à-vis a re-rating factor. In some embodiments, the system 512 may estimate or compute the time-to-shed, as discussed previously, based on thermal properties of the load center main breaker (i.e., $T_{shed} = T_{therm}(I_{ema}, R * I_{OCPD})$). At block 1304, the system 512 prepares a request containing time-to-shed and the power margin to the selected smart load. At block 1306, the system 512 establishes communication with the device controller of the selected smart load using, for example, one of the standard or dedicated communication protocols mentioned above. The system 512 then communicates the request to the device controller of the selected smart load to reduce power consumption based on the power margin within the time-to-shed window at block 1308, and waits for an acknowledgment from the smart load at block 1310.

At block 1312, the energy management system 512 makes a determination whether an acknowledgment was received from the device controller of the selected smart load. If the determination is yes, then the system 512 updates the list of smart loads to reflect that the selected smart load has provided an appropriate acknowledgment at block 1318. The system 512 thereafter updates the power margin of the load center based on the power reduction from the selected smart load at block 1320. On the other hand, if the determination at block 1312 is no, then the system 512 marks or otherwise denotes the selected smart load as either unresponsive or unable to accomplish the power reduction request at block 1314. At block 1316, the system 512 proceeds to look for the next smart load to process. In the foregoing, it should be noted that no individual smart load is necessarily expected to reduce the power margin to zero, but its power consumption reduction can help to minimize the power margin, and the next smart load can further contribute to reducing the power margin.

As can be seen from the foregoing, embodiments of the energy management system herein provide numerous advantages and benefits. For example, the energy management system is configured to determine a trip time of the main circuit breaker based on the overall system current measurements. The system is also configured to establish communication with smart loads, smart appliances, and smart control devices, such as thermostats, C&C breakers or relays, and the like. The system is further configured to share information about the power reduction required and the amount of time for the smart loads to respond. The system is still further configured to determine load shedding is needed based on load prioritization and acknowledgement of each load, and to check overall system current levels and the trip time until the main breaker reaches a tripping point. If any of the smart loads and appliances are unable to reduce power consumption or fail to acknowledge the power reduction request and the load center is still in an overload state, then the system is configured to command the respective C&C breakers of the loads to interrupt power to the loads.

More specifically, in some embodiments, the energy management system herein is configured to determine whether an overall energy level of a load center reaches a setpoint threshold, and determine a trip time based on processing of a thermal model of main circuit breaker. The energy management system is configured to maintain and update a list of subscribed smart appliances and communicating and control (C&C) breakers that includes a priority level for the smart loads for purposes of communicating a request to reduce power consumption that contains energy information and time remaining until thermal tripping. The system is configured to establish communication with one or more loads and provide each load an amount of time to reduce their load and by a certain amount. The system is configured to allow the smart appliances to reply with an acknowledgment of the request, or decline to comply due to an operation cycle that cannot be interrupted during the requested time window because the operation cycle requires a longer amount of time, or because the amount of energy required to be reduced cannot be achieved. The system is configured to continue communication with each smart load(s) until the power reduction is achieved. If the power reduction is not achieved, then the system is configured to communicate with C&C breakers or C&C relays to interrupt the power to the branch circuits to disconnect the loads using the priority scheme set for each circuit interruption device. The system is configured determine the overall power level of the main panel breaker and determine whether the power level is below a setpoint threshold and thermal state of the main panel breaker. Once the thermal properties of the main panel breaker are in a non-tripping state, then the system is configured to start communicating with the C&C breakers that were previously commanded to interrupt the branch circuit to switch them back on, or communicate with smart loads that previously provided an acknowledgment to request them to resume their normal operation. The system is configured to maintain and update the state of each smart load, whether it is online or offline, responsive or non-responsive, or in shedding or lower power state, and the system operates based on those statuses.

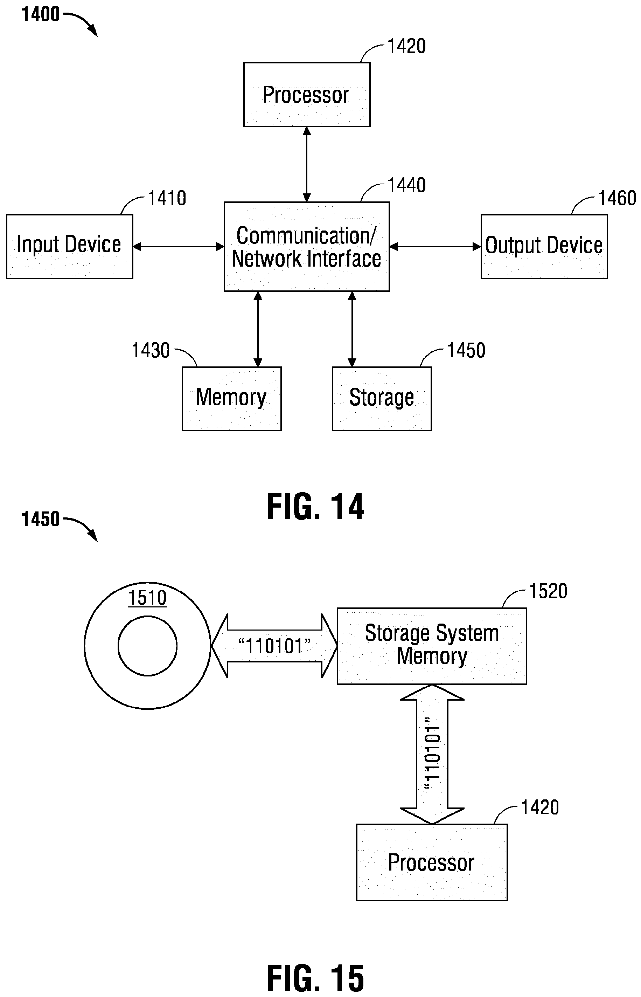

FIG. 14 illustrates an example system that may be used to implement various embodiments of the energy management system discussed in this disclosure. For example, various embodiments of the disclosure may be implemented as specialized software executing in an energy management system 1400 such as that shown in FIG. 14. The system 1400 may include a processor 1420 connected to one or more memory devices 1430, such as magnetic or solid sate memory, either embedded and discrete, or other memory devices for storing data. Memory 1430 is typically used for storing programs and data during operation of the system 1400. The system 1400 may also include a storage unit 1450 that provides additional storage capacity. Components of system 1400 may be coupled by a communication interface 1440, which may include one or more busses (e.g., between components that are integrated within the same machine) and/or a network interface 1440 (e.g., between components that reside on separate discrete machines). The communication/network interface 1440 enables communications (e.g., data, instructions) to be exchanged between system components of system 1400 and system components of other systems on the network.

System 1400 also includes one or more input devices 1410, for example, keys, buttons, microphone, touch screen, and one or more output devices 1460, for example, a display screen, LEDs, and the like. In addition, system 1400 may contain one or more interfaces (not shown) that connect system 1400 to a communication network (in addition or as an alternative to the interconnection mechanism 1440).

The storage unit 1450, shown in greater detail in FIG. 15, typically includes a computer readable and writeable nonvolatile recording medium 1510 in which signals are stored that define a program to be executed by the processor 1420 or information stored on or in the medium 1510 to be processed by the program to perform one or more functions associated with embodiments described herein. To this end, the processor 1420 may be any suitable processing unit, such as a microprocessor, microcontroller, ASIC, and the like, and the medium any suitable recording medium, such as a magnetic or solid-state memory. Typically, in operation, the processor 1420 causes data to be read from the nonvolatile recording medium 1510 into storage system memory 1520 that allows for faster access to the information by the processor than does the medium 1510. This storage system memory 1520 is typically a volatile, random access memory such as a dynamic random-access memory (DRAM) or static memory (SRAM). This storage system memory 1520 may be located in storage unit 1450, as shown, or in the system memory 1430. The processor 1420 generally manipulates the data within the memory system 1520 and then copies the data to the medium 1510 after processing is completed. A variety of mechanisms are known for managing data movement between the medium 1510 and the integrated circuit memory element 1520, and the disclosure is not limited thereto. The disclosure is not limited to a particular memory 1520, memory 1430 or storage unit 1450.

The system 1400 may include specially programmed, special-purpose hardware, for example, an application-specific integrated circuit (ASIC). Aspects of the disclosure may be implemented in software, hardware or firmware, or any combination thereof. Further, such methods, acts, systems, system elements and components thereof may be implemented as part of the system described above or as an independent component.

Although the system 1400 is shown by way of example as one type of system upon which various aspects of the disclosure may be practiced, it should be appreciated that aspects of the disclosure are not limited to being implemented on the system as shown in FIG. 14. Various aspects of the disclosure may be practiced on one or more devices having a different architecture or components from that shown in FIG. 14. Further, where functions or processes of embodiments of the disclosure are described herein (or in the claims) as being performed on a processor or controller, such description is intended to include systems that use more than one processor or controller to perform the functions.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

It will be appreciated that the development of an actual commercial application incorporating aspects of the disclosed embodiments will require many implementation-specific decisions to achieve a commercial embodiment. Such implementation specific decisions may include, and likely are not limited to, compliance with system related, business related, government related and other constraints, which may vary by specific implementation, location and from time to time. While a developer's efforts might be considered complex and time consuming, such efforts would nevertheless be a routine undertaking for those of skill in this art having the benefit of this disclosure.

It should also be understood that the embodiments disclosed and taught herein are susceptible to numerous and various modifications and alternative forms. Thus, the use of a singular term, such as, but not limited to, "a" and the like, is not intended as limiting of the number of items. Similarly, any relational terms, such as, but not limited to, "top," "bottom," "left," "right," "upper," "lower," "down," "up," "side," and the like, used in the written description are for clarity in specific reference to the drawings and are not intended to limit the scope of the invention.

This disclosure is not limited in its application to the details of construction and the arrangement of components set forth in the following descriptions or illustrated by the drawings. The disclosure is capable of other embodiments and of being practiced or of being carried out in various ways. Also, the phraseology and terminology used herein is for the purpose of descriptions and should not be regarded as limiting. The use of "including," "comprising," "having," "containing," "involving," and variations herein, are meant to be open-ended, i.e., "including but not limited to."

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or system, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage system, a magnetic storage system, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

One or more portions of the computer system may be distributed across one or more computer systems coupled to a communications network. For example, as discussed above, a computer system that determines available power capacity may be located remotely from a system manager. These computer systems also may be general-purpose computer systems. For example, various aspects of the disclosure may be distributed among one or more computer systems configured to provide a service (e.g., servers) to one or more client computers, or to perform an overall task as part of a distributed system. For example, various aspects of the disclosure may be performed on a client-server or multi-tier system that includes components distributed among one or more server systems that perform various functions according to various embodiments of the disclosure. These components may be executable, intermediate (e.g., IL) or interpreted (e.g., Java) code which communicate over a communication network (e.g., the Internet) using a communication protocol (e.g., TCP/IP). For example, one or more database servers may be used to store system data, such as expected power draw, that is used in designing layouts associated with embodiments of the present disclosure.

Various embodiments of the present disclosure may be programmed using an object-oriented programming language, such as SmallTalk, Java, C++, Ada, or C# (C-Sharp). Other object-oriented programming languages may also be used. Alternatively, functional, scripting, and/or logical programming languages may be used, such as BASIC, Fortran, Cobol, TCL, Lua, Python, Rust or basic C. Various aspects of the disclosure may be implemented in a non-programmed environment (e.g., analytics platforms, or documents created in HTML, XML or other format that, when viewed in a window of a browser program render aspects of a graphical-user interface (GUI) or perform other functions). Various aspects of the disclosure may be implemented as programmed or non-programmed elements, or any combination thereof.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Thus far, a number of features and advantages of embodiments of the present disclosure have been shown and described. Other possible features and advantages associated with the disclosed embodiments will be appreciated by one of ordinary skill in the art. It should also be understood that embodiments of the disclosure herein may be configured as a system, method, or combination thereof. Accordingly, embodiments of the present disclosure may be comprised of various means including hardware, software, firmware or any combination thereof.

While particular embodiments and applications of the present disclosure have been illustrated and described, it is to be understood that embodiments of the disclosure not limited to the precise construction and compositions disclosed herein and that various modifications, changes, and variations can be apparent from the foregoing descriptions without departing from the scope of the disclosure as defined in the appended claims.

**Claims**

1. An energy management system for a load center, the system comprising:

   a processor; and
   a storage unit coupled to the processor, the storage unit storing computer-readable instructions thereon that, when executed by the processor, cause the processor to:

   obtain a load center energy level from an overcurrent protection device in the load center, the load center energy level indicating an amount of current flowing through the overcurrent protection device;
   determine that the load center is operating in an overloaded state based on the load center energy level;
   send a request to a smart load of the load center requesting that the smart load reduce a power consumption thereof to avoid thermal tripping of the overcurrent protection device; and
   wait a predefined acknowledgment period for receipt of an acknowledgment from the smart load indicating that the smart load has received the request.

2. The system of claim 1, wherein the computer-readable instructions further cause the processor to estimate a time-to-shed in response to determining that the load center is operating in the overloaded state, the time-to-shed representing an amount of time until load shedding is required for one or more loads of the load center to ensure the thermal tripping of the overcurrent protection device is avoided if the load center continues operating in the overloaded state.

3. The system of claim 2, wherein the computer-readable instructions cause the processor to include the time-to-shed in the request sent to the smart load, the time-to-shed indicating to the smart load an amount of time within which the smart load is requested to reduce the power consumption thereof.

4. The system of claim 1, wherein the computer-readable instructions further cause the processor to estimate a power margin for the load center, the power margin indicating an amount of power by which the load center energy level exceeds a power rating of the load center or a permissible percentage thereof.

5. The system of claim 4, wherein the computer-readable instructions cause the processor to include the power margin in the request sent to the smart load, the power margin indicating to the smart load an amount of power by which the smart load is requested to reduce the power consumption thereof.

6. The system of claim 1, wherein the smart load is one of a plurality of smart loads of the load center and the computer-readable instructions cause the processor to select the smart load from among the plurality of smart loads to send the request to based on a priority level of the smart load.

7. The system of claim 6, wherein the smart load is a first smart load and the computer-readable instructions further cause the processor to select a second smart load from among the plurality of smart loads to send a request to based on a priority level of the second smart load in response to: the processor not receiving the acknowledgment from the first smart load within the predefined acknowledgment period, or the load center continuing to operate in the overloaded state after the processor receives the acknowledgment from the first smart load within the predefined acknowledgment period.

8. The system of claim 7, wherein the computer-readable instructions further cause the processor to determine that the load center is no longer operating in the overloaded state based on the load center energy level, and send a notice to each smart load in the plurality of smart loads to which a request was sent, the notice indicating to the smart load that the load center is no longer operating in the overloaded state.

9. The system of claim 7, wherein the computer-readable instructions further cause the processor to select a circuit breaker in the load center based on a priority level of a smart load of the circuit breaker and send a command to the circuit breaker to disconnect power from the smart load of the circuit breaker in response to one of: the processor not receiving an acknowledgment from any smart load in the plurality of smart loads to which a request was sent within the predefined acknowledgment period, or the load center continuing to operate in the overloaded state after the processor receives an acknowledgment from each smart load in the plurality of smart loads to which a request was sent within the predefined acknowledgment period.

10. The system of claim 9, wherein the computer-readable instructions further cause the processor to determine that the load center is no longer operating in the overloaded state based on the load center energy level, and send a command to the circuit breaker to reconnect power to the smart load of the circuit breaker in response to determining that the load center is no longer operating in the overloaded state.

11. The system of claim 1, wherein the computer-readable instructions further cause the processor to obtain a panel temperature within the load center corresponding to the load center energy level and determine that the load center is operating in the overloaded state based on the panel temperature within the load center and the load center energy level.

12. A method of managing a load center, the method comprising

obtaining a load center energy level from an overcurrent protection device in the load center, the load center energy level indicating an amount of current flowing through the overcurrent protection device;

determining that the load center is operating in an overloaded state based on the load center energy level;

sending a request to a smart load of the load center requesting that the smart load reduce a power consumption thereof to avoid thermal tripping of the overcurrent protection device; and

waiting a predefined acknowledgment period for receipt of an acknowledgment from the smart load indicating that the smart load has received the request.

13. A load center, comprising

a housing;

an overcurrent protection device installed within the housing; and

an energy management system installed within the housing and communicatively coupled to the overcurrent protection device, the energy management system configured to:

obtain a load center energy level from an overcurrent protection device in the load center, the load center energy level indicating an amount of current flowing through the overcurrent protection device;

determine that the load center is operating in an overloaded state based on the load center energy level;

send a request to a smart load of the load center requesting that the smart load reduce a power consumption thereof to avoid thermal tripping of the overcurrent protection device; and

wait a predefined acknowledgment period for receipt of an acknowledgment from the smart load indicating that the smart load has received the request.

14. The load center of claim 13, wherein the energy management system is further configured to obtain a panel temperature within the load center corresponding to the load center energy level and determining that the load center is operating in the overloaded state based on the panel temperature within the load center and the load center energy level.

100 ⟍

FIG. 1

FIG. 2

**FIG. 3**

FIG. 4

**FIG. 5**

512

600 — Initialization

602 — Load Center Energy and Temperature Measurement (including current and panel temperature measurements)

604 — Filter and Conditioning

606 — OCPD Thermal Model

608 — Panel Temperature Model

610 — EMS State Machine

612 — Configuration Thresholds

614 — Device Control (C&C Breakers) & (Smart Loads)

Device Control Signals

**FIG. 6**

700

| Breaker id | C&C Breaker | Branch Label | CB Handle Rating | C&C Breaker Priority | Breaker State | Smart Load ID | Smart Load | Smart Load State | Comm. State |
|---|---|---|---|---|---|---|---|---|---|
| | 702 | 704 | 706 | 708 | 710 | 712 | 714 | 716 | 718 | 720 |
| 1 | Yes | Laundry Room | 30 | 2 | NORMAL_ON | 1967 | Washer & Dryer | ACK_CTRL_SHED | online |
| 2 | Yes | Kitchen 1 | 40 | 1 | NORMAL_ON | 2250 | Electric Stove | ACK_CTRL_NORMAL | online |
| 3 | No | Kitchen 2 | 20 | 0 | N/A | 5230 | Dish Washer | ACK_CTRL_NORMAL | online |
| 4 | Yes | Garage/Charger | 60 | 4 | CTRL_OFF | 5630 | EVSE Charger | ACK_CTRL_OFF | online |
| 5 | No | AC Unit | 30 | 0 | N/A | 8843 | Thermostat | ACK_CTRL_SHED | online |
| 6 | No | Furnace | 15 | 0 | N/A | 8843 | | | |
| ... | | | | | | | | | |
| n-1 | Yes | Basement | 40 | 3 | NORMAL_ON | 3356 | Electric Water Heater | ACK_CTRL_SHED | online |
| n | Yes | Outdoor | 30 | 5 | NORMAL_ON | 8215 | Pool Pump | ACK_CTRL_NORMAL | online |

**FIG. 7**

EP 4 686 021 A1

$800$

```
                            ( Start )
                               │
                               ▼
                  ┌────────────────────────────┐ ─ 802
                  │ Authenticate connection with smart
                  │    loads and C&C breakers   │
                  └────────────────────────────┘
                               │
   (A)─────────────────────────┤
                  ┌ ─ ─ ─ ─ ─ ─┼─ ─ ─ ─ ─ ─ ─ ┐ ─ 804
                  │ ┌──────────────────────────┐│
                  │ │ Obtain load center energy and
                  │ │ temperature measurements ││
                  │ └──────────────────────────┘│
  ┌──────────────┐│            │                │      See FIG. 9
  │ Recovery and ││            ▼     ─ 806       │
  │ normal operation ◄── No ◄  Is              │
  │ (see FIG. 12)││     load center overloaded ?│
  └──────────────┘│            │ Yes            │
        810       │            ▼     ─ 812       │           ─ 814
                  │        Immediate shedding ── Yes ──► Process breakers for
                  │            ?                │       immediate shedding
                  └ ─ ─ ─ ─ ─ ─│─No─ ─ ─ ─ ─ ─ ┘       (see FIG. 11)
                               ▼     ─ 816
                  ┌────────────────────────────┐
                  │ Determine power margin and time to shed
                  │ based on OCPD thermal properties │
                  └────────────────────────────┘
                               │     ─ 818
                               ▼
                  ┌────────────────────────────┐
                  │ Look up internal map of smart
                  │    loads and C&C breakers   │
                  └────────────────────────────┘
                               │     ─ 820
                               ▼
                  ┌────────────────────────────┐
                  │ Select smart load with which to
                  │ communicate based on load priority │
                  └────────────────────────────┘
                               │     ─ 822
                               ▼                          (A)
                           Any                             │   ─ 823
                     smart loads remaining ── No ──► Process breakers for
                           ?                          thermal shedding
                               │ Yes                  (see FIG. 10)
                  ┌ ─ ─ ─ ─ ─ ─│─ ─ ─ ─ ─ ┐ ─ 824
                  │            ▼            │
                  │ ┌──────────────────────┐│
                  │ │ Send time to shed and power
                  │ │ margin for smart load to start
                  │ │ reducing power       ││
                  │ └──────────────────────┘│
                  │            │     ─ 826  │   See FIG. 12
  ┌──────────────┐│           ▼            │
  │ Look for next ◄── No ◄ Acknowledgment  │
  │ smart load   ││       received         │
  └──────────────┘│            ?           │
        828       └ ─ ─ ─ ─ ─ ─│─ Yes ─ ─ ─┘
                               ▼
                              (A)
```

**FIG. 8**

FIG. 9

1000

```
        ┌──────────────┐
        │    Start     │
        └──────┬───────┘
               │
               ▼                          ⌐1002
    ┌─────────────────────────┐
    │  Select C&C breaker based on  │
    │     highest load priority for    │
    │  unresponsive smart loads and   │
    │   smart loads unable to process  │
    │    power reduction request      │
    └─────────────┬───────────┘
                  │
                  ▼                       ⌐1004
    ┌─────────────────────────┐
    │   Shed load by causing C&C    │
    │    breaker to interrupt power   │
    └─────────────┬───────────┘
                  │
                  ▼                       ⌐1006
    ┌─────────────────────────┐
    │   Update load list by marking  │
    │    C&C breaker entry as OFF    │
    └─────────────┬───────────┘
                  │
                  ▼                       ⌐1008
    ┌─────────────────────────┐
    │  Go to load center energy and  │
    │   temperature measurements    │
    └─────────────┬───────────┘
                  │
                  ▼
```

# FIG. 10

1100

**Start**

Identify next load to shed
based on lowest load priorities — 1102

Shed load by causing C&C
breaker to interrupt power — 1104

Update load list by marking
C&C breaker entry as OFF — 1106

Go to Load Center Energy and
Temperature Measurements — 1108

# FIG. 11

1200

(A)

Start

1202 — Look for shedded smart loads or tripped C&C breakers

1210 — Load Center Energy and Temperature Measurements

1204 — Determine smart load or C&C breaker priority to return to normal operation mode

1208 — Wait N(sec)

1206 — $L[n] == $ OFF State ?  No / Yes

1212 — Compute Thermal Recovery Time

(Thermal Properties of OCPD)
$$T_{off} = T_{cool}(I_{ema}, R * I_{OCPD})\ [sec]$$

1214 — Start Recovery Timer
$T_{cnt\_off} = T_{off}$

1216 — $T_{cnt\_off} == 0$ ?  Yes / No

1218 — Decrement Recovery Timer
$T_{cnt\_off} --$

1220 — Command breaker to reconnect load or notify smart load to resume normal operation $L[n]$

1222 — Update smart load in device table
$L[n] = $ ON State

## FIG. 12

1300

**Start**

1302
Compute power margin for load to reduce from total panel load

1304
Prepare a request with time to shed and power margin to the selected smart load

1306
Establish communication with smart load device controller

1308
Send request to reduce power consumption based on power margin within time-to-shed window

1310
Wait for acknowledgment from smart load device controller

1312
Acknowledgment received ? — **Yes**

**No**

1316
Look for next smart load (FIG. 8)

1314
Mark smart load as unresponsive or unable to accomplish request

1318
Update smart load record to show acknowledgment received

1320
Update load center power margin based on power consumption reduction by smart load

# FIG. 13

1400

1420

Processor

1410

Input Device

1440

Communication/
Network Interface

1460

Output Device

1430

Memory

1450

Storage

**FIG. 14**

1450

1510

"110101"

1520

Storage System
Memory

"110101"

1420

Processor

**FIG. 15**

Europäisches
Patentamt

European
Patent Office

Office européen
des brevets

## EUROPEAN SEARCH REPORT

Application Number

EP 25 18 9449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 955 815 A1 (MITSUBISHI ELECTRIC CORP [JP]; MITSUBISHI ELECTRIC HOME APPL [JP]) 16 December 2015 (2015-12-16) | 1,4-14 | INV. H02H3/033 H02H3/093 |
| A | * paragraphs [0376] - [0470]; figures 4, 22, 52-57 * | 2,3 | H02H7/26 H02J3/14 |
| A | US 2017/069008 A1 (WANG JACKSON KIT [CA] ET AL) 9 March 2017 (2017-03-09) * paragraphs [0081] - [0083] * | 1,12,13 | ADD. H02H3/00 H02H6/00 |
| A | US 2009/315400 A1 (HOWE WILLIAM [US] ET AL) 24 December 2009 (2009-12-24) * paragraphs [0049] - [0054]; figures 1-5 * | 1-14 | |
| A | WO 2016/059853 A1 (SHARP KK [JP]) 21 April 2016 (2016-04-21) * translation enclosed; paragraphs [0021] - [0072]; figures 1-14 * | 1-14 | |
| A | US 2023/396055 A1 (NAKANO HIROSHI [JP] ET AL) 7 December 2023 (2023-12-07) * paragraphs [0031] - [0100]; figures 1-9 * | 1-14 | TECHNICAL FIELDS SEARCHED (IPC) H02H H02J |

The present search report has been drawn up for all claims

| Place of search | Date of completion of the search | Examiner |
|---|---|---|
| Munich | 10 October 2025 | Gomes Guerreiro, G |

EPO FORM 1503 03.82 (P04C01)

## ANNEX TO THE EUROPEAN SEARCH REPORT
## ON EUROPEAN PATENT APPLICATION NO.

EP 25 18 9449

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | | | Publication date | Patent family member(s) | | Publication date |
|---|---|---|---|---|---|---|
| EP 2955815 | A1 | 16-12-2015 | | CN | 104981963 A | 14-10-2015 |
| | | | | EP | 2955815 A1 | 16-12-2015 |
| | | | | JP | 6149046 B2 | 14-06-2017 |
| | | | | JP | 6324587 B2 | 16-05-2018 |
| | | | | JP | 2017139962 A | 10-08-2017 |
| | | | | JP | WO2014122943 A1 | 26-01-2017 |
| | | | | WO | 2014122943 A1 | 14-08-2014 |
| US 2017069008 | A1 | 09-03-2017 | | CA | 2601474 A1 | 14-09-2006 |
| | | | | GB | 2439490 A | 27-12-2007 |
| | | | | US | 2008272934 A1 | 06-11-2008 |
| | | | | US | 2013038468 A1 | 14-02-2013 |
| | | | | US | 2014203933 A1 | 24-07-2014 |
| | | | | US | 2017069008 A1 | 09-03-2017 |
| | | | | WO | 2006096854 A2 | 14-09-2006 |
| US 2009315400 | A1 | 24-12-2009 | | CA | 2666430 A1 | 02-05-2008 |
| | | | | EP | 2080420 A2 | 22-07-2009 |
| | | | | US | 2008088180 A1 | 17-04-2008 |
| | | | | US | 2009315400 A1 | 24-12-2009 |
| | | | | US | 2010117620 A1 | 13-05-2010 |
| | | | | US | 2010117621 A1 | 13-05-2010 |
| | | | | WO | 2008051386 A2 | 02-05-2008 |
| WO 2016059853 | A1 | 21-04-2016 | | JP | 6386579 B2 | 05-09-2018 |
| | | | | JP | WO2016059853 A1 | 18-05-2017 |
| | | | | WO | 2016059853 A1 | 21-04-2016 |
| US 2023396055 | A1 | 07-12-2023 | | CN | 116569433 A | 08-08-2023 |
| | | | | DE | 112021004810 T5 | 27-07-2023 |
| | | | | JP | 7449853 B2 | 14-03-2024 |
| | | | | JP | 2022103897 A | 08-07-2022 |
| | | | | US | 2023396055 A1 | 07-12-2023 |
| | | | | WO | 2022145095 A1 | 07-07-2022 |

For more details about this annex : see Official Journal of the European Patent Office, No. 12/82

## REFERENCES CITED IN THE DESCRIPTION

**Patent documents cited in the description**

- US 01737625
- US 78462824